# FASCICULE DE BREVET EUROPEEN

(11) **EP 3 753 714 B1**
(45) Date de publication et mention de la délivrance du brevet: **19.08.2026**
(21) Numéro de dépôt: 20180377.2
(22) Date de dépôt: 16.06.2020
(51) Int. Cl.: B29C 65/20, A61M 39/14, B29C 65/78, B29K 101/12

(54) **MACHINE DE CONNEXION POUR CONNECTER DES TUBES PAR THERMO-SOUDURE**
VERBINDUNGSMASCHINE ZUM VERBINDEN VON ROHREN DURCH THERMISCHE VERSCHWEISSUNG
CONNECTION MACHINE FOR CONNECTING PIPES BY THERMO-WELDING

(30) Priorité: 19.06.2019 FR 1906571
(43) Date de publication de la demande: 23.12.2020
(73) Titulaire: MGA Technologies, 69380 Civrieux d'Azergues (FR)
(72) Inventeur: de MALLIARD, Hervé, 69160 Tassin la Demi-Lune (FR)
(74) Mandataire: Ipsilon

(56) Documents cités:
- US-A1- 2003 089 446
- US-B2- 7 119 305

## Description

La présente invention concerne une machine de connexion permettant de connecter deux tubes entre eux par thermo-soudure.

Dans les domaines biomédical et pharmaceutique, il est souvent nécessaire de réaliser des connexions stériles entre deux tubes, par exemple des tubes en matière thermoplastique élastomère, dans lesquels peuvent circuler des flux de liquides ou de gaz, divers produits chimiques ou encore des composés organiques.

Par exemple, une telle connexion peut permettre de relier un tube dans lequel sont déversés des produits toxiques issus d'un processus de fabrication pharmaceutique à un réservoir destiné à recevoir et stocker ces produits.

De même, afin de réaliser des transferts de cultures biologiques ou de composés organiques entre deux contenants, il est nécessaire de réaliser une connexion stérile entre un premier tube relié au premier contenant et un deuxième tube relié au deuxième contenant, afin de connecter entre eux les deux contenants.

Pour réaliser de telles connexions stériles, il est déjà connu d'utiliser des machines de connexion capables de :
- compresser et déformer les deux tubes à connecter jusqu'à leur obturation complète,
- sectionner les deux tubes obturés, et
- connecter par thermo-soudure les tronçons de tubes ainsi formés.

L'étape d'obturation des tubes permet de d'assurer qu'aucun composé présent à l'intérieur de ceux-ci ne soit mis en contact avec l'air libre une fois ces tubes sectionnés, empêchant ainsi toute contamination ou pollution du milieu extérieur.

A l'inverse, elle permet également de garantir que les composés présents à l'intérieur des tubes ne soient pas contaminés par ce même milieu extérieur.

Cependant, les étapes de section et de thermo-soudure des tubes à connecter peuvent donner lieu à la projection de débris ou d'impuretés autour des tubes à connecter.

Par exemple, le sectionnement des tubes peut provoquer le jaillissement de nombreux résidus autour de ceux-ci et les opérations des thermo-soudure la chute de matière fondue sous ces mêmes tubes.

De plus, dans le cas, accidentel, où l'obturation des tubes est imparfaitement réalisée, des composés chimiques ou biologiques dangereux présents à l'intérieur des tubes peuvent potentiellement se répandre dans la machine de connexion.

Or, les machines de connexion connues de l'état de la technique présentent l'inconvénient que les divers moyens d'actionnement et de commande mis en œuvre au cours de l'opération de connexion sont exposés, au moins en partie, à ces débris et impuretés : ces derniers peuvent ainsi gêner le fonctionnement de la machine de connexion, voire même gravement l'endommager.

Par exemple, le document US8857485 décrit une machine de connexion comportant deux étaux permettant de compresser les deux tubes à connecter, ces étaux se déplaçant le long de guides disposés sous la portion des tubes subissant les opérations de section et de thermo-soudure : les impuretés résultant de ces opérations peuvent ainsi former des dépôts sur ces guides et, par suite, bloquer le déplacement des deux étaux.

De même, un moteur permettant le déplacement des tubes est situé à proximité immédiate de cette même portion, et peut donc être également atteint par diverses projections susceptibles de l'endommager.

Les documents US 2003/089446 A1 et US 7 119 305 B2 divulguent également des machines de connexion adaptées pour connecter par thermo-soudure un premier tube et un deuxième tube.

La présente invention a pour but de résoudre en tout ou partie cet inconvénient, en proposant une machine de connexion ne pouvant être endommagée par les projections de débris ou d'impuretés issues de l'opération de connexion, et dont le fonctionnement ne peut être perturbé par ces mêmes projections.

Un autre but de l'invention est de proposer une machine de connexion dont l'entretien et l'utilisation par un opérateur sont facilités.

Encore un autre but de l'invention est de proposer une machine de connexion permettant de réaliser des connexions stériles entre deux tubes de manière fiable et en toute sécurité, en limitant tout risque de contamination du milieu extérieur par les composés présents à l'intérieur desdits tubes, ou inversement.

A cet effet, elle propose, une machine de connexion adaptée pour connecter par thermo-soudure un premier tube et un deuxième tube, comportant :
- un système de préhension, conçu pour positionner dans une zone de soudure, parallèles entre eux selon une direction longitudinale, le premier tube et le deuxième tube, et pour compresser lesdits premier tube et deuxième tube selon une direction transversale,
- une lame chauffante, apte à sectionner le premier tube et le deuxième tube lorsque ceux-ci sont en position dans le système de préhension, de manière à former deux premiers tronçons à partir du premier tube et deux deuxièmes tronçons à partir du deuxième tube, chacun de ces premiers tronçons et deuxièmes tronçons présentant une extrémité fondue, et
- des moyens d'actionnement et de commande prévus pour déplacer le système de préhension et la lame chauffante,

et dans laquelle le système de préhension est adapté pour déplacer lesdits premiers tronçons et deuxièmes tronçons de manière à mettre en contact l'extrémité fondue d'au moins l'un des premiers tronçons avec celle d'au moins l'un des deuxièmes tronçons,
caractérisée en ce que les moyens d'actionnement et de commande sont disposés en dehors d'une zone de projection naturelle de débris ou d'impuretés résultant de l'opération de connexion par thermo-soudure du premier tube et du deuxième tube.

Il est, en préambule, à noter que le premier tube et le deuxième tube sont avantageusement constitués dans un matériau adapté à une opération de thermo-soudure par la lame chauffante : ce matériau doit être adapté pour se ramollir et fondre au moins partiellement lorsque soumis à une température élevée atteinte par la lame chauffante, et retrouver sa rigidité après refroidissement.

Par exemple, le premier tube et le deuxième tube peuvent être formés dans un matériau élastomère thermoplastique, de type PPE.

La machine de connexion selon l'invention présente deux principaux effecteurs, le système de préhension et la lame chauffante, agissant sur le premier et le deuxième tubes à connecter et permettant de réaliser les trois étapes essentielles de l'opération de connexion précédemment évoquées :
- compression et déformation du premier tube et du deuxième tube selon la direction transversale grâce au système de préhension, afin d'obtenir une obturation de ces derniers de manière que les composés chimiques ou biologiques (notamment sous forme liquide) présents à l'intérieur du premier tube et du deuxième tube restent isolés du milieu extérieur au cours de l'opération de connexion,
- section transversale du premier tube et du deuxième tube par la lame chauffante, aboutissant à la formation de deux premiers tronçons à partir du premier tube et de deux deuxièmes tronçons à partir du deuxième tube, chacun de ces tronçons présentant une extrémité fondue, du fait de la température élevée de la lame chauffante, et
- déplacement d'au moins l'un des premiers tronçons et d'au moins l'un des deuxièmes tronçons de manière à mettre en contact leurs extrémités fondues respectives.

A l'issue de cette dernière étape de mise en contact, une fois les extrémités desdits tronçons mises en contact refroidies et rigidifiées, l'un des premiers tronçons et l'un des deuxièmes tronçons se trouvent soudés l'un à l'autre, connectant ainsi l'un à l'autre.

Le système de préhension et la lame chauffante sont ainsi bien adaptés pour connecter le premier tube et le deuxième tube.

La zone de soudure est définie comme la portion spatiale de la machine de connexion dans laquelle sont effectuées les différentes étapes précédemment décrites de l'opération de connexion.

Ainsi, cette zone de soudure inclut notamment, mais n'est pas limitée à :
- la zone de l'espace dans laquelle la compression et la déformation du premier tube et du deuxième tube par le système de préhension sont réalisées,
- la zone de l'espace dans laquelle la section du premier tube et du deuxième tube par la lame chauffante est réalisée, et
- la zone de l'espace dans laquelle le déplacement et la mise en contact des tronçons issus de l'opération de section sont réalisés.

Le système de préhension et la lame chauffante sont mis en mouvement, au cours des diverses étapes de l'opération de connexion, par des moyens d'actionnement et de commande.

Les moyens d'actionnement peuvent, par exemple, notamment comprendre des actionneurs tels que des moteurs électriques ou des vérins pneumatiques ou hydrauliques, et des transmetteurs d'énergie mécanique tels que des arbres d'entraînement, des engrenages ou encore des systèmes à courroie.

Les moyens de commande peuvent, par exemple, comprendre des composants électroniques tels qu'un microcontrôleur ou un automate programmable, et divers capteurs tels que des capteurs de vitesse, de pression ou de position.

Une grande variété de modes de réalisation concernant ces moyens d'actionnement et ces moyens de commande peuvent bien entendu être envisagés.

Ces moyens de d'actionnement et de commande sont ainsi composés d'éléments sensibles et fragiles : leur fonctionnement peut être gêné et altéré par les projections de débris et d'impuretés précédemment décrits, issus de l'opération de connexion du premier tube et du deuxième tube.

La machine de connexion selon l'invention permet de protéger les moyens d'actionnement et de commande de ces projections, en s'assurant que ceux-ci sont disposés en dehors d'une zone de projection naturelle de débris ou d'impuretés située à proximité de la zone de soudure.

En effet, les deux opérations susceptibles de produire des tels débris ou de telles impuretés, à savoir les opérations de section des tubes et de fusion des extrémités des premiers tronçons et des deuxièmes tronçons, sont réalisées dans la zone de soudure, par la lame chauffante : les débris et impuretés sont donc formés dans la zone de soudure et subissent ensuite les effets de la force de gravité, tendant à les entraîner vers le bas, en direction du sol.

De même, dans le cas d'une mauvaise obturation du premier tube ou du deuxième tube par le système de préhension, les éventuels composés chimiques ou biologiques présents à l'intérieur de ces mêmes tubes s'épandent dans la machine de connexion depuis la zone de soudure et subissent la force de gravité.

La zone de projection naturelle précédemment évoquée peut ainsi être définie comme l'ensemble des positions spatiales physiquement atteignables par un débris ou une impureté formée dans la zone de soudure.

Cette zone de projection naturelle prend en compte la vitesse et la direction de projection initiales des débris ou impuretés : il est par exemple possible que certains de ces débris ou impuretés soient projetés latéralement à la zone de soudure, ou même au-dessus de celle-ci.

Du fait de la direction de la force de gravité et des faibles vitesses de projection initiales, la zone de projection naturelle reste située à proximité de la zone de soudure, et substantiellement en-dessous de celle-ci.

En disposant les moyens d'actionnement et de commande en dehors de cette zone de projection naturelle, il est ainsi certain qu'aucun débris ou impureté ne puisse les atteindre : cette caractéristique permet donc de garantir un meilleur fonctionnement de la machine de connexion, d'augmenter sa durée de vie, et d'en faciliter le nettoyage, aucun dépôt ou incrustation d'impuretés ou débris n'étant possible sur les éléments fragiles des moyens d'actionnement et de commande.

Il est important de noter que, par ailleurs, la lame chauffante et le système de préhension sont, eux, nécessairement situés dans la zone de soudure et ne sont pas protégés des débris ou impuretés formés dans cette même zone de soudure.

Selon une possibilité, les moyens d'actionnement et de commande sont adaptés pour déplacer la lame chauffante selon la direction transversale, entre une position escamotée, en dehors de la zone de soudure, et une position déployée, dans la zone de soudure.

Il est également envisageable que la machine de connexion soit conformée de manière à permettre à un opérateur de retirer la lame chauffante de la machine de connexion, afin de pouvoir procéder au nettoyage ou au remplacement de cette même lame chauffante.

Dans un mode de réalisation, les moyens d'actionnement et de commande sont disposés au-dessus de la zone de soudure, de sorte que les détritus ou impuretés sont écartés des moyens d'actionnement et de commande par gravité.

Selon une possibilité, la machine de connexion comporte un compartiment de manutention déplaçable par translation entre une position rétractée, sous la zone de soudure et inaccessible à un utilisateur de la machine de connexion, et une position déployée, déportée par rapport à la zone de soudure et permettant à cet utilisateur de positionner le premier tube et le deuxième tube en position dans le système de préhension.

En effet, le système de préhension devant permettre une compression et un déplacement du premier tube et du deuxième tube, il présente dans de nombreux modes de réalisation plusieurs éléments encombrants s'étendant tout autour du premier tube et du deuxième tube lorsque ceux-ci sont en position dans la zone de soudure : il est de ce fait difficile pour un opérateur de placer le premier tube et le deuxième tube en position dans la zone de soudure en vue de l'opération de connexion. Par exemple, lorsque le système de préhension présente une structure en forme de pinces ou d'étaux, il peut être malcommode de placer le premier tube et le deuxième tube directement dans ces pinces ou étaux.

Le compartiment de manutention déplaçable permet de résoudre ce problème :
- dans sa position déployée, le compartiment de manutention est déporté par rapport à la zone de soudure et aux éléments encombrants du système de préhension, et est ainsi facilement accessible à un opérateur, qui peut aisément positionner le premier tube et le deuxième tube dans ce compartiment de manutention, par exemple sur un élément de support du système de préhension prévu à cet effet,
- dans sa position rétractée, le compartiment est situé en-dessous de la zone de soudure (il est alors inaccessible à l'opérateur) et le premier tube et le deuxième tube se trouvent disposés dans la zone de soudure, sur l'élément de support, en position pour être compressés et déplacés par le système de préhension.

Une fois l'opération de connexion entièrement réalisée, il est alors possible de déplacer à nouveau le compartiment de manutention vers la position déployée afin de permettre à l'utilisateur de récupérer les tubes ainsi connectés.

Le compartiment de manutention peut, par exemple, suivre un mouvement de translation rectiligne horizontal entre sa position déployée et sa position rétractée.

D'autres types de mouvements et de trajectoires peuvent être envisagés.

Selon une caractéristique, le compartiment de manutention présente une portion de réception destinée à recevoir les débris ou impuretés, permettant le nettoyage de ces débris ou impuretés lorsque le compartiment de manutention est en position déployée.

Cette portion de réception peut, par exemple, prendre la forme d'une surface plane ou concave disposée directement en-dessous de la zone de soudure lorsque le compartiment de manutention est dans la position rétractée.

Sous l'effet de la force de gravité, de nombreux débris ou impuretés formés au cours de l'opération de connexion sont naturellement dirigés vers la portion de réception où ceux-ci sont récupérés.

Une fois le compartiment de manutention en position déployée, cette portion de réception est accessible à un opérateur, alors capable de la nettoyer et d'éliminer ces débris et impuretés.

La présence de cette portion de récupération permet donc de concentrer et contenir l'ensemble des débris et projections issus de l'opération de connexion dans une zone restreinte et ainsi de limiter les opérations de nettoyage de la machine de connexion à cette même portion de récupération : aucun nettoyage des fragiles moyens d'actionnement et de commande n'est nécessaire.

Dans un mode de réalisation, le système de préhension comprend :
- une première pince et une deuxième pince présentant chacune deux mors déplaçables entre une configuration ouverte et une configuration fermée,
- un élément de support, et
- un premier étrier et un deuxième étrier, aptes à être positionnés sur l'élément de support, et comportant chacun un corps central qui présente deux faces opposées, chacune de ces faces opposées étant munie d'un emplacement prévu pour recevoir le premier tube ou le deuxième tube,
le premier étrier étant adapté pour coopérer avec la première pince et le deuxième étrier étant adapté pour coopérer avec la deuxième pince, de sorte que, lorsque le premier tube et le deuxième tube sont en position sur chacun des premier étrier et deuxième étrier et lorsque la première pince et la deuxième pince sont en configuration fermée, lesdits premier tube et deuxième tube sont tous deux compressés selon la direction transversale entre le corps central du premier étrier et du deuxième étrier et l'un des mors de la première pince ou de la deuxième pince.

Cette structure du système de préhension permet de réaliser efficacement et avec fiabilité l'étape de compression du premier tube et du deuxième tube dans la direction transversale.

En effet, un tel système de préhension permet de compresser le premier tube et le deuxième tube en deux zones de la direction longitudinale en ne nécessitant la commande et le déplacement que deux pinces uniquement.

Chacun du premier tube et du deuxième tube est placé dans un emplacement adapté d'un premier étrier et d'un deuxième étrier, ces emplacements étant disposés de part et d'autre du corps central de chaque étrier.

La forme et les dimensions du premier étrier et du deuxième étrier sont adaptées de manière que, lorsque le premier étrier est placé entre les mors de la première pince et le deuxième étrier entre ceux de la deuxième pince, le déplacement des mors de ces deux pinces vers la configuration fermée ait pour effet de compresser le premier tube et le deuxième tube dans la direction transversale.

Le premier tube est ainsi compressé entre l'un des mors de la première pince et le corps central du premier étrier, et également entre l'un des mors de la deuxième pince et le corps central du deuxième étrier.

De même, le deuxième tube est compressé entre l'autre des mors de la première pince et le corps central du premier étrier, et également entre l'autre des mors de la deuxième pince et le corps central du deuxième étrier.

La fermeture de la première pince et de la deuxième pince sur le premier étrier et le deuxième étrier permet donc d'obturer le premier tube et le deuxième tube en deux zones, entre lesquels la lame chauffante peut effectuer l'opération de section de ces mêmes tubes sans répandre dans la machine de connexion aucun des composés chimiques ou biologiques présents dans l'un ou l'autre de ces derniers.

Par ailleurs, il est envisageable d'adapter la forme du premier étrier et du deuxième étrier aux dimensions du premier tube et du deuxième tube, afin de pouvoir, avec un déplacement inchangé des mors de la première pince et de la deuxième pince, compresser des tubes de diamètres et d'épaisseur différents.

Notamment, l'épaisseur du corps central, séparant le premier tube et le deuxième tube lorsque ceux-ci sont en position sur chaque étrier, peut être modifiée : par exemple, en augmentant cette épaisseur, il est possible de comprimer des tubes de diamètre ou épaisseur différents.

Selon une possibilité, le premier étrier et le deuxième étrier sont identiques.

De la sorte, ils sont parfaitement interchangeables (chacun d'eux étant alors adapté pour coopérer aussi bien avec la première pince qu'avec la deuxième pince) et l'utilisation de la machine de connexion par un opérateur s'en trouve alors facilitée.

Dans une variante, la première pince et la deuxième pince sont déplaçables par translation entre une position haute, dans laquelle celles-ci sont entièrement disposées au-dessus de la zone de soudure, et une position basse, dans laquelle les mors de celles-ci sont disposés, au moins en partie, de part et d'autre de la zone de soudure, lorsque lesdites première pince et deuxième pince sont dans la configuration ouverte.

Cette caractéristique permet notamment de désencombrer la zone de soudure et de simplifier le positionnement du premier tube et du deuxième tube dans celle-ci.

Dans une autre variante, la première pince et la deuxième pince sont déplaçables l'une par rapport à l'autre par translation selon la direction longitudinale, de manière à modifier une distance d'écartement les séparant.

Ce déplacement selon la direction longitudinale a pour but, comme cela sera décrit plus précisément plus bas, de permettre l'insertion de la lame chauffante entre la première pince et la deuxième pince.

Selon une caractéristique, les deux mors d'au moins l'une de la première pince et de la deuxième pince sont symétriques, dans la configuration ouverte et la configuration fermée, par rapport à un plan médian vertical et sont guidés en rotation, entre ces dernières configurations, autour de deux axes de rotation, parallèles entre eux et symétriques par rapport au plan médian,
et dans laquelle chacun desdits mors est lié par une liaison pivot à une pièce intermédiaire, chacune de ces pièces intermédiaires étant déplaçable en translation selon un même axe de translation, orthogonal à l'axe de rotation, entre une position proximale, définissant la configuration ouverte de ladite pince, et une position distale, définissant la configuration fermée de ladite pince.

Cette structure permet de commander et d'effectuer de manière très simple les mouvements de fermeture et d'ouverture de la pince.

En effet, il suffit de déplacer le long de l'axe de translation chacune des pièces intermédiaires reliées à un mors de la pince pour entraîner les deux mors de celle-ci en rotation autour de leurs axes de rotation respectifs et ainsi réaliser son ouverture ou sa fermeture : dans la configuration fermée, les deux pièces intermédiaires sont dans leur position distale respective (la distance les séparant selon l'axe de translation est alors maximale) et dans la configuration ouverte, les deux pièces intermédiaires sont dans leur position proximale respective (la distance les séparant selon l'axe de translation est alors minimale).

Il est envisageable que chacune des pièces intermédiaires soit reliée à un même système d'entraînement adapté pour déplacer celles-ci de manière symétrique par rapport au plan médian.

De nombreux modes d'entraînement peuvent être envisagés, notamment des systèmes vis-écrou, pignon-crémaillère ou poulie-courroie.

Il est également envisageable que chacune des pièces intermédiaires soit entraînée indépendamment l'une de l'autre.

Il est à noter que le fait que les deux mors effectuent un mouvement de rotation autour d'axes de rotation distincts permet de s'assurer que la compression du premier tube et du deuxième tube soit bien effectuée selon la direction transversale.

En effet, dans les modes de réalisation dans lesquels les deux mors sont entraînés en rotation autour d'un même axe de rotation contenu dans le plan médian, le premier tube et le deuxième tube subissent des contraintes mécaniques selon des directions légèrement inclinées par rapport à la direction transversale : le mouvement de fermeture de la pince tend alors à projeter le premier tube et le deuxième tube vers le bas et ne permet pas de complètement obturer ces derniers.

Selon une possibilité, la première pince et la deuxième pince présentent la même structure, leurs mors respectifs étant entraînés en rotation autour des deux mêmes axes de rotation par le déplacement de pièces intermédiaires le long de deux axes de translation parallèles.

Dans un mode de réalisation, les pièces intermédiaires sont déplaçables selon l'axe de translation sous l'action d'un actionneur, et au moins l'une des pièces intermédiaires présente une portion déformable, conçue pour se déformer dans la direction de l'axe de translation, de manière à compenser un déplacement sous l'action de l'actionneur, lorsque ladite pièce intermédiaire est dans sa position distale.

Comme mentionné plus haut, l'ouverture et la fermeture de chaque pince sont effectuées grâce à des moyens d'actionnement et de commande, aptes à mettre en mouvement les mors de la pince.

Ces moyens d'actionnement comprennent notamment un actionneur capable de déplacer les pièces intermédiaires entre leurs positions proximale et distale respectives. Cet actionneur est contrôlé par des moyens de commande et obéit à des consignes de déplacement envoyées par ces moyens de commande.

Dans le cas d'un mouvement de fermeture d'une des pince, l'actionneur a pour consigne de déplacer les pièces intermédiaires jusqu'à leurs positions distales respectives : or, si le positionnement des pièces intermédiaires dans leurs positions distales respectives permet d'assurer une bonne fermeture de la pince « à vide », il n'est pas certain que cette même pince soit complètement fermée lorsque ses mors se referment sur le premier tube et le deuxième tube, afin de compresser ces derniers.

En effet, ce premier tube et ce deuxième tube peuvent présenter des dimensions et des résistances mécaniques à la déformation variable : une même consigne de déplacement reçue par l'actionneur peut donc résulter, selon les cas, en une obturation totale ou partielle du premier tube et du deuxième tube.

Afin de s'assurer de la fermeture complète de la pince (et donc d'une obturation totale des tubes sur lesquels elle se referme), les moyens de commande envoient à l'actionneur une consigne de déplacement de l'une des pièces intermédiaires au-delà de sa position distale.

Cette pièce intermédiaire est pourvue d'une portion déformable dans la direction de l'axe de translation ayant pour rôle de compenser le surplus de déplacement imposé par l'actionneur : une fois la pince complètement fermée (c'est-à-dire une fois la résistance mécanique des tubes surmontée par l'actionneur), ce surplus de déplacement aurait pour conséquence d'exercer des efforts mécaniques importants sur cette pièce intermédiaire alors même que celle-ci est dans sa position distale et ne pourrait physiquement pas être déplacée au-delà, menant ainsi à un risque de déformation de la pince, voire de casse de la machine de connexion.

Grâce à la portion déformable, la pièce intermédiaire peut absorber par sa propre déformation le surplus de déplacement imposé par l'actionneur, tout en restant dans sa position distale.

Selon une possibilité, la partie déformable comporte un organe élastique, tel qu'un empilement de rondelles élastiques de type Belleville dans la direction de l'axe de translation.

Par exemple, il est envisageable d'utiliser un empilement d'une dizaine de telles rondelles élastiques.

Le nombre et les caractéristiques de ces rondelles élastiques, notamment leur épaisseur et leur raideur, sont avantageusement choisis pour être adaptés à l'ensemble des différents modèles de tubes envisagés, selon le diamètre et la résistance à la déformation de ceux-ci.

Dans un mode de réalisation, les pièces intermédiaires sont reliées à un même arbre d'entrainement, s'étendant selon l'axe de translation, par l'intermédiaire d'un système vis-écrou, l'arbre d'entraînement entraînant par sa rotation les pièces intermédiaires en translation, et dans laquelle ledit système vis-écrou est conformé pour être irréversible.

Cette caractéristique d'irréversibilité a pour but d'améliorer la fiabilité et la sécurité de la machine de connexion, en s'assurant que l'ouverture des pinces soit impossible sous l'effet des efforts mécaniques exercés par le premier tube et le deuxième tube sur les mors respectifs de celles-ci.

Par exemple, en cas de défaillance des moyens de commande ou de panne d'alimentation des moyens d'actionnement des pinces lorsque celles-ci sont en position fermée, comprimant le premier tube et le deuxième tube, l'obturation totale de ces derniers reste garantie car l'arbre d'entraînement ne peut pas être mis en rotation sous l'effet de la force exercée par le premier tube et le deuxième tube sur les mors des pinces : les composés chimiques ou biologiques éventuellement présents à l'intérieur de ceux-ci ne peuvent donc pas se répandre dans la machine de connexion et toute contamination du milieu extérieur est évitée.

Dans un mode de réalisation, l'arbre d'entrainement comporte :
- une vis à bille coopérant avec l'une des pièces intermédiaires,
- une vis trapézoïdale coopérant avec l'autre des pièces intermédiaires, et
- un manchon d'accouplement, permettant d'accoupler la vis à bille et la vis trapézoïdale,
le coefficient de frottements entre la vis trapézoïdale et la pièce intermédiaire avec laquelle elle coopère étant plus important que celui entre la vis à bille et la pièce intermédiaire avec laquelle elle coopère.

Cette association d'une vis à bille et d'une vis trapézoïdale présente plusieurs avantages :
- la vis à bille réversible permet de fortement diminuer les frottements mécaniques dans la liaison hélicoïdale la liant avec une des pièces intermédiaires, minimisant ainsi les pertes du couple imposé par l'actionneur,
- la vis trapézoïdale, liée à l'autre pièce intermédiaire, présente un coefficient de frottements plus important que la vis à bille et permet de rendre le système vis-écrou irréversible.

Selon une caractéristique, au moins la première pince ou la deuxième pince comporte un dispositif autobloquant fixé sur les mors de celle-ci, permettant d'empêcher tout mouvement relatif de ces derniers ayant pour conséquence de rompre leur symétrie par rapport au plan médian.

Comme précédemment décrit, les mors des pinces sont guidés en rotation autour d'un axe de rotation entre les configurations ouverte et fermée, tout en restant symétriques par rapport à un plan médian vertical.

Dans le cas où le déplacement des mors ne serait plus symétrique par rapport à ce plan médian, par exemple en cas de mouvement global de rotation pendulaire d'une pince autour de l'axe de rotation, la compression du premier tube et celle du deuxième tube ne seraient plus simultanées : en conséquence, le mouvement de fermeture de la première pince et de la deuxième pince exercerait de fortes contraintes mécaniques sur le système de support sur lequel le premier étrier et le deuxième étrier sont positionnés, ainsi que sur d'autres pièces de la machine de connexion.

De plus, la qualité de l'obturation du premier tube et du deuxième tube ne serait plus garantie.

Le dispositif autobloquant, directement fixé sur les mors d'au moins l'une des pinces, permet d'assurer que le mouvement des mors de celle-ci reste bien symétrique par rapport au plan médian, afin d'éviter les problèmes précités.

Selon une variante, le dispositif autobloquant comporte :
- une première crémaillère, fixée sur l'un premier des mors de ladite pince, coopérant par engrenage avec un premier pignon fixe, de manière à guider le mouvement de rotation dudit mors autour de l'axe de rotation,
- une deuxième crémaillère, fixée sur l'autre des mors de ladite pince, coopérant par engrenage avec un deuxième pignon fixe, de manière à guider le mouvement de rotation dudit mors autour de l'axe de rotation,
et dans laquelle le premier pignon et le deuxième pignon coopèrent également par engrenage l'un avec l'autre.

Le premier pignon et le deuxième pignon peuvent, par exemple, être fixés sur le châssis, immobile, de la machine de connexion et sont chacun entraînés autour d'un axe fixe par la première et deuxième crémaillère respectivement, fixées sur chacun des mors de l'une des pinces.

Lors des mouvements de fermeture ou d'ouverture de cette pince (au cours desquels les mors restent symétriques par rapport au plan médian), le premier pignon et le deuxième pignon sont mis en mouvement dans des sens de rotation différents et s'engrènent l'un avec l'autre.

Tout mouvement global de rotation pendulaire de cette même pince autour de l'axe de rotation aurait pour effet de mettre en mouvement le premier pignon et le deuxième pignon dans des sens de rotation identiques, empêchant ainsi tout engrenage entre eux : ce mouvement de rotation pendulaire est donc rendu impossible par le dispositif autobloquant.

Selon une possibilité, le premier pignon et le deuxième pignon sont symétriques par rapport au plan médian.

Dans un mode de réalisation, le système de préhension est adapté pour déplacer les premiers tronçons et deuxièmes tronçons de manière à mettre en contact l'extrémité fondue de l'un des premiers tronçons avec celle de l'un des deuxièmes tronçons, et à mettre en contact l'extrémité fondue de l'autre des premiers tronçons avec celle de l'autre des deuxièmes tronçons.

Lorsque le système de préhension n'est adapté que pour mettre en contact qu'un seul des premiers tronçons avec un seul des deuxièmes tronçons, l'opération de connexion a pour résultat trois éléments distincts :
- l'un des premiers tronçons connecté avec un l'un des deuxièmes tronçons,
- l'autre des premiers tronçons isolé, présentant au moins une extrémité libre, et
- l'autre des deuxièmes tronçons isolé, présentant au moins une extrémité libre.

Ainsi, une fois ces éléments retirés du système de préhension, l'intérieur des deux tronçons isolés est mis en contact avec le milieu extérieur : l'intérieur de ces tronçons isolés conservant potentiellement des traces de composés chimiques ou biologiques dangereux (ayant circulé dans le premier tube ou le deuxième tube avant leur obturation par le système de préhension), ce mode de réalisation rend possible une contamination du milieu extérieur par ces composés chimiques ou biologiques.

Le système de préhension selon l'invention permet au contraire de souder l'un à l'autre les deux tronçons isolés précédents et d'ainsi éviter la propagation de composés chimiques ou biologiques dans le milieu extérieur, ainsi que la pollution de ces mêmes composés chimiques ou biologiques par le milieu extérieur.

Selon une caractéristique, la première pince présente une portion interne conçue pour effectuer, lorsque ladite première pince est en configuration fermée, un mouvement de rotation par rapport aux mors de celle-ci autour d'un axe colinéaire à la direction longitudinale,
ladite portion interne étant conformée pour entraîner en rotation le premier étrier ainsi que l'un des premiers tronçons et l'un des deuxièmes tronçons en position sur ce même premier étrier, afin de mettre en contact l'extrémité fondue du premier tronçon en position sur le premier étrier avec celle du deuxième tronçon en position sur le deuxième étrier, et à mettre en contact l'extrémité fondue du deuxième tronçon en position sur le premier étrier avec celle du premier tronçon en position sur le deuxième étrier.

Ce mouvement de rotation de la partie interne, une fois le premier tube et le deuxième tube sectionnés par la lame chauffante, entraînant le premier étrier ainsi que l'un des premiers tronçons et l'un des deuxièmes tronçons en position sur ce dernier, permet de connecter deux à deux les premiers tronçons et les deuxièmes tronçons, afin de limiter les risques de contamination du milieu extérieur, comme précédemment décrit. Une description plus précise de la portion interne et de son mouvement de rotation sera proposée plus bas.

D'autres caractéristiques et avantages de la présente invention apparaîtront à la lecture de la description détaillée ci-après, d'un exemple de mise en œuvre non limitatif, faite en référence aux Figures annexées dans lesquelles :
[Fig. 1] est une vue en perspective du premier tube et du deuxième tube,
[Fig. 2] est une vue latérale du premier tube et du deuxième tube,
[Fig. 3] est une vue en perspective de la machine de connexion selon l'invention
[Fig. 4] est une représentation, en perspective, de l'étape de mise en position du premier tube et du deuxième tube dans la zone de soudure,
[Fig. 5] est une représentation, en vue latérale, de l'étape de mise en position du premier tube et du deuxième tube dans la zone de soudure,
[Fig. 6] est une représentation, en vue latérale, de l'étape de fermeture de la première pince et de la deuxième pince,
[Fig. 7] est une représentation, en vue latérale, de l'étape de déformation du premier tube et du deuxième tube,
[Fig. 8] est une représentation, en vue latérale, de l'étape de déplacement vertical de la première pince et de la deuxième pince,
[Fig. 9] est une représentation, en vue latérale, de l'étape de déplacement longitudinal de la première pince et de la deuxième pince,
[Fig. 10] est une représentation, en vue latérale, de l'étape de section du premier tube et du deuxième tube,
[Fig. 11] est une représentation, en vue latérale, de l'étape de section du premier tube et du deuxième tube,
[Fig. 12] est une représentation de l'étape de déplacement de l'un des premiers tronçons et de l'un des deuxièmes tronçons,
[Fig. 13] est une représentation schématique de l'étape de déplacement de l'un des premiers tronçons et de l'un des deuxièmes tronçons,
[Fig. 14] est une vue de détail des premiers tronçons,
[Fig. 15] est une vue latérale de la première pince en configuration ouverte,
[Fig. 16] est une vue latérale de la première pince en configuration fermée,
[Fig. 17] est une vue en perspective des moyens d'actionnement,
[Fig. 18] est une vue latérale de la première pince en configurations ouverte et fermée,
[Fig. 19] est une vue de détail de l'arbre d'entraînement.

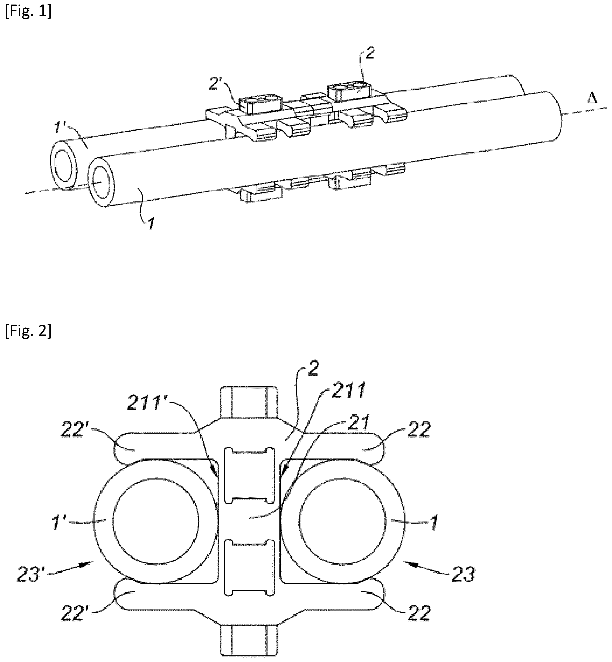

La figure 1 est une vue en perspective d'un premier tube 1 et d'un deuxième tube 1' à connecter, en position sur un premier étrier 2 et un deuxième étrier 2', en vue d'une opération de connexion utilisant une machine de connexion selon l'invention.

Ce premier tube 1 et ce deuxième tube 1' sont disposés parallèlement l'un à l'autre, selon une direction longitudinale Δ, et le premier étrier 2 et le deuxième étrier 2' sont placés adjacents selon cette même direction longitudinale Δ.

La figure 2 est une vue de côté de ces mêmes premier tube 1 et deuxième tube 1'.

Le premier étrier 2 comporte un corps central 21, présentant une première surface 211 et une deuxième surface 211'.

Ce premier étrier 2 comporte également des éléments de guidage 22 en porte-à-faux sur la surface 211 formant un emplacement de réception 23 du premier tube 1, et des éléments de guidage 22' en porte-à-faux sur la surface 211' formant un emplacement de réception 23' du deuxième tube 1'.

Il est à noter que le premier tube 1 et le deuxième tube 1' dépassent latéralement de leurs emplacements respectifs 23 et 23', de manière à permettre leur compression par un système de préhension, comme cela sera décrit plus bas.

Les dimensions de l'étrier 2 sont adaptées à celles du premier tube 1 et du deuxième tube 1', de sorte que chacun d'entre eux soit, une fois en position dans les emplacements 23 et 23', respectivement en contact avec les surfaces 211 et 211' et les éléments de guidage 22 et 22'.

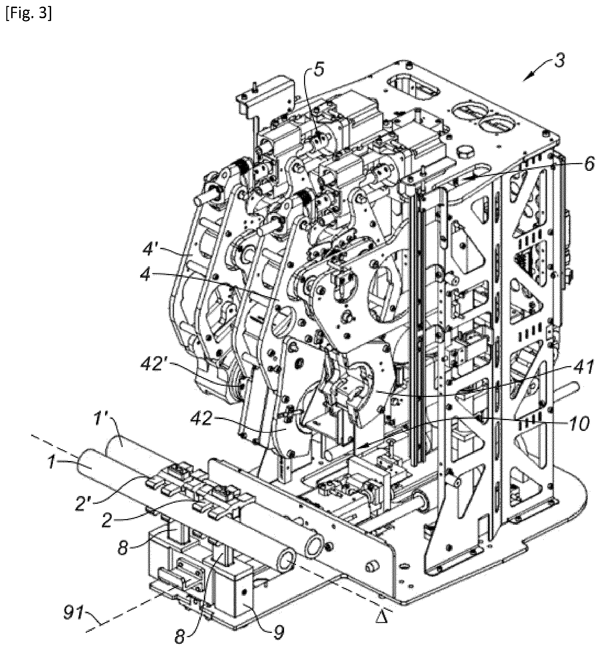

La figure 3 représente une machine de connexion 3 selon l'invention, permettant de connecter le premier tube 1 et le deuxième tube 1'.

La machine de connexion 3 comporte une première pince 4 et une deuxième pince 4', chacune comportant deux mors 41 et 42 (respectivement 41' et 42'), déplaçables entre une configuration ouverte (configuration représentée par la figure 3) et une configuration fermée (configuration dans laquelle ceux-ci sont placés l'un contre l'autre, non représentée sur la figure 3).

Le déplacement des mors 41, 42, 41' et 42' entre la configuration ouverte et la configuration fermée est réalisé grâce à des moyens d'actionnement 5 et des moyens de commande 6.

Une description plus détaillée de la structure de la première pince 4 et de la deuxième pince 4', du mouvement des mors 41, 42, 41' et 42' et de leur interaction avec les moyens d'actionnement 5 et les moyens de commande 6 sera proposée plus bas.

La machine de connexion 3 comporte également une lame chauffante 7 non représentée sur cette figure 3.

Enfin, cette machine de connexion 3 présente une zone de soudure 10, située à la verticale sous les mors 41, 42, 41' et 42' et correspondant à la région de l'espace dans laquelle aura lieu l'étape de thermo-soudure décrite plus loin.

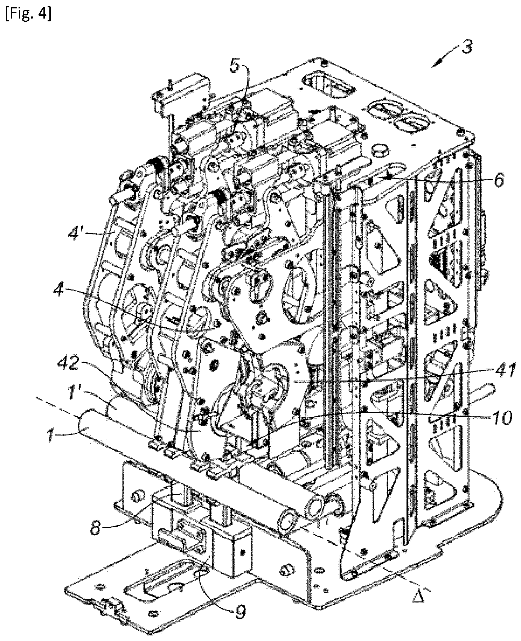

Les figures 4 à 14 suivantes illustrent les différentes étapes du fonctionnement de la machine de connexion 3 aboutissant à la connexion du premier tube 1 et du deuxième tube 1' par thermo-soudure, à partir de la configuration initiale représentée par la figure 3.

Dans cette configuration, le premier tube 1 et le deuxième tube 1' sont en position sur le premier étrier 2 et le deuxième étrier 2' précédemment décrits.

Ce premier étrier 2 et ce deuxième étrier 2' sont placés sur un système de support 8, ce système de support 8 étant lui-même fixé à un compartiment de manutention 9.

Ce compartiment de manutention 9 est déplaçable en translation selon une direction 91 entre une position déployée, déportée par rapport au reste du corps de la machine de connexion 3 et en particulier déporté par rapport à la zone de soudure 10, et une position rétractée, située sous la zone de soudure 10.

Sur la figure 3, le compartiment de manutention est dans sa position déployée et est facilement accessible à un opérateur, qui peut ainsi aisément disposer le premier étrier 2 et le deuxième étrier 2' (et le premier tube 1 et le deuxième tube 1') sur le système de support 8.

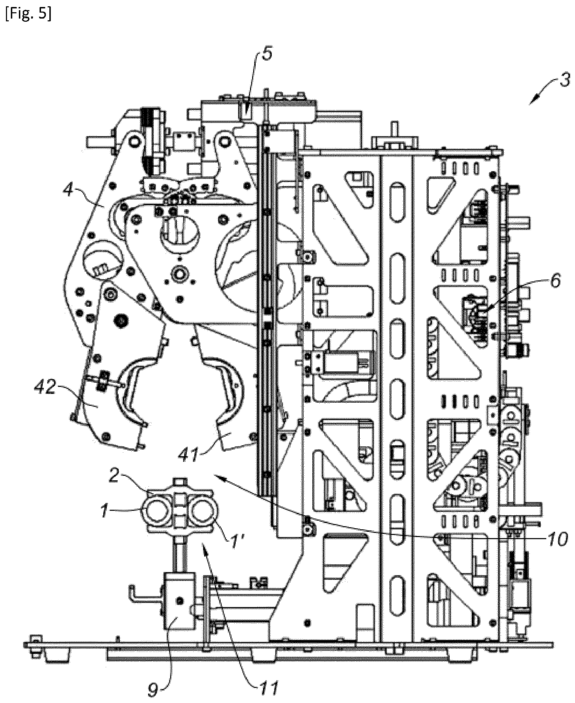

Une fois le premier tube 1 et le deuxième tube 1' dans cette configuration initiale, l'opérateur déplace le compartiment de manutention 9 jusqu'à sa position rétractée, comme visible sur les figures 4 et 5.

Dans cette position rétractée, le premier tube 1 et le deuxième tube 1' sont situés dans la zone de soudure 10, sous la première pince 4 et la deuxième pince 4'.

Il est à noter que la position du premier tube 1 et du deuxième tube 1' est alors difficilement accessible à un opérateur, notamment du fait de l'encombrement des mors 41, 42, 41' et 42' : ce problème est ainsi pallié grâce à la présence du compartiment de manutention 9.

On constate en particulier sur la figure 5 que les moyens d'actionnement 5 et les moyens de commande 6 sont bien disposés à distance de la zone de soudure et en dehors d'une zone de projection naturelle 11 de débris ou d'impuretés issus de l'opération de connexion, cette zone de projection naturelle 11 étant substantiellement située autour du premier tube 1 et du deuxième tube 1' et en-dessous de ceux-ci.

De ce fait, aucun débris ou impureté issu de l'opération de connexion ne peut atteindre ces moyens d'actionnement 5 ou ces moyens de commande 6 et ainsi altérer leur bon fonctionnement.

Les seuls éléments présents dans la zone de projection naturelle 11 sont la lame chauffante 7 et les mors 41, 42, 41' et 42' (après déplacement depuis leur configuration initiale) et le compartiment de manutention : aucun de ces éléments ne comporte de composant fragile dont le fonctionnement risque d'être perturbé par des débris ou des impuretés projetées depuis la zone de soudure 10.

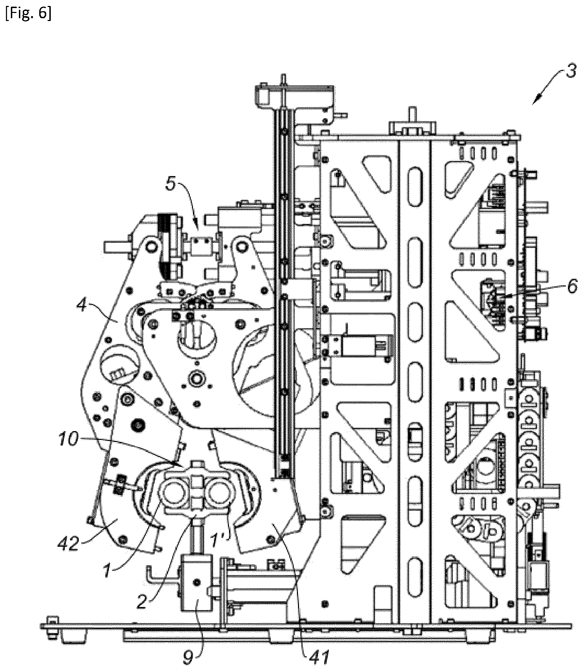

Une fois le premier tube 1 et du deuxième tube 1' en position dans la zone de soudure 10, les pinces 4 et 4' sont abaissées vers une position basse, toujours en configuration ouverte, de manière que les mors 41 et 41' d'une part et 42 et 42' d'autre part soient disposés de part et d'autre du premier tube 1 et du deuxième tube 1', comme représenté par la figure 6.

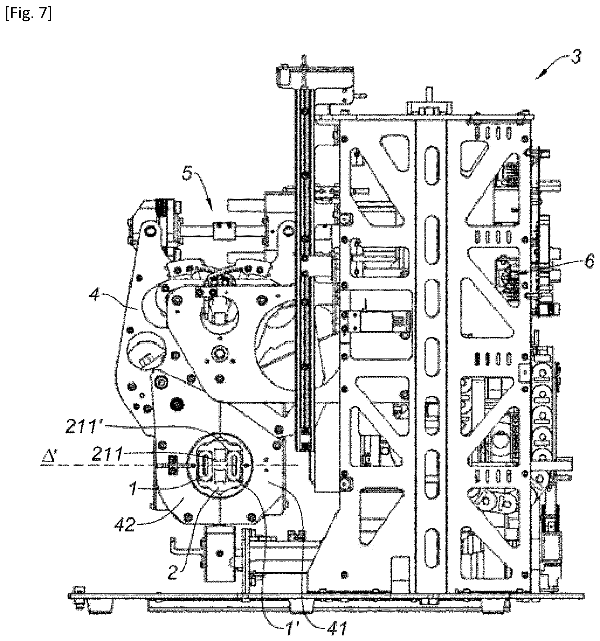

Les mors 41,42, 41' et 42' de la première pince 4 et de la deuxième pince 4' sont ensuite positionnés dans la configuration fermée, tel que visible sur la figure 7.

Il est envisageable de réaliser ce mouvement de fermeture en deux temps :
- une première phase de fermeture rapide, tant que les mors 41,42, 41' et 42' de la première pince 4 et de la deuxième pince 4' ne sont pas en contact avec le premier tube 1 et le deuxième tube 1', puis,
- une deuxième phase de fermeture lente, lorsque les mors 41,42, 41' et 42' de la première pince 4 et de la deuxième pince 4' sont en contact avec le premier tube 1 et le deuxième tube 1', afin d'assurer une bonne compression de ces derniers.

Ce mouvement de fermeture des mors 41, 42, 41' et 42' sera davantage détaillé par la suite.

Lorsque la première pince 4 et la deuxième pince 4' sont en configuration fermée, le premier tube 1 et le deuxième tube 1' se trouvent compressés selon une direction transversale Δ' orthogonale à la direction longitudinale Δ : cette compression a pour effet de déformer ces mêmes premier tube 1 et deuxième tube 1' selon la direction transversale Δ' jusqu'à leur obturation totale.

Par exemple, le premier tube 1 est compressé, au niveau d'une première zone de compression, entre la surface 211 du corps central 21 du premier étrier 2 et le mors 41 de la première pince 4, et le deuxième tube 1' est compressé, au niveau de la même première zone de compression, entre la surface 211' du corps central 21 du premier étrier 2 et le mors 42 de la première pince.

De même, la deuxième pince 4' compresse le premier tube 1 et le deuxième tube 1' selon la direction transversale Δ', au niveau d'une deuxième zone de compression, espacée de la première zone de compression le long de la direction longitudinale Δ.

Cette double obturation du premier tube 1 et du deuxième tube 1' a deux objectifs :
- faciliter la section de ces derniers par la lame chauffante 7, entre les deux zones de compression et selon la direction transversale Δ', du fait de la réduction de leur épaisseur selon cette direction transversale Δ', et
- empêcher la circulation entre les deux zones de compression de composés chimiques ou biologiques (par exemple en phase liquide) présents à l'intérieur du premier tube 1 et du deuxième tube 1', afin de pouvoir réaliser la section de ces derniers sans répandre ces composés chimiques ou biologiques dans la machine de connexion et contaminer le milieu extérieur.

Il est à noter qu'il est envisageable que les fermetures de la première pince 4 et de la deuxième pince 4' aient lieu successivement, par exemple la fermeture de la première pince 4 en premier lieu puis celle de la deuxième pince 4', afin d'évacuer les éventuels composés chimiques ou biologiques présents entre la première zone de compression et la deuxième zone d compression.

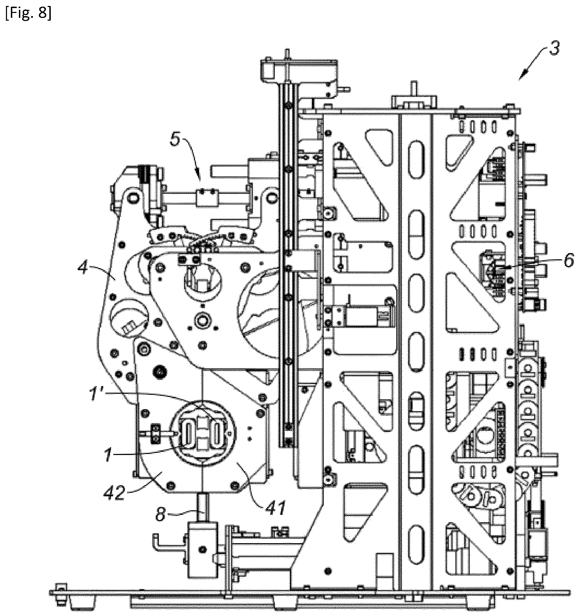

Une fois le premier tube 1 et le deuxième tube 1' compressés et obturés par la première pince 4 et la deuxième pince 4', celles-ci sont déplacées, toujours en configuration fermée, verticalement et vers le haut, comme représenté sur la figure 8.

La forme des mors 41, 42, 41' et 42' est adaptée pour que, dans leur déplacement vertical, la première pince 4 et la deuxième pince 4' entraînent avec elles le premier étrier 2, le deuxième étrier 2', le premier tube 1 et le deuxième tube 1', de manière à désengager le premier étrier 2 et le deuxième étrier 2' du système de support 8.

Cette étape a pour but de permettre les mouvements relatifs ultérieurs du premier étrier 2 et du deuxième étrier 2' l'un par rapport à l'autre.

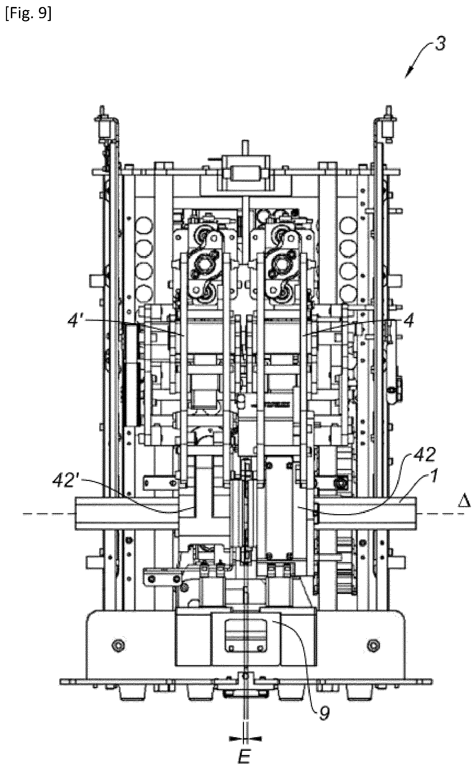

L'étape suivante consiste à déplacer la première pince 4 et la deuxième pince 4' selon la direction longitudinale Δ de manière à écarter celles-ci l'une de l'autre en augmentant la distance d'écartement E les séparant, tel que représenté par la figure 9.

Durant ce déplacement, la première pince 4 et la deuxième pince 4' restent en configuration fermée et continuent de compresser le premier tube 1 et le deuxième tube 1' selon la direction transversale Δ' : l'augmentation de la distance d'écartement E a donc pour effet d'étirer ces derniers selon la direction longitudinale Δ.

Cet étirement longitudinal du premier tube 1 et du deuxième tube 1' permet de faciliter l'opération de section de ceux-ci par la lame chauffante 7.

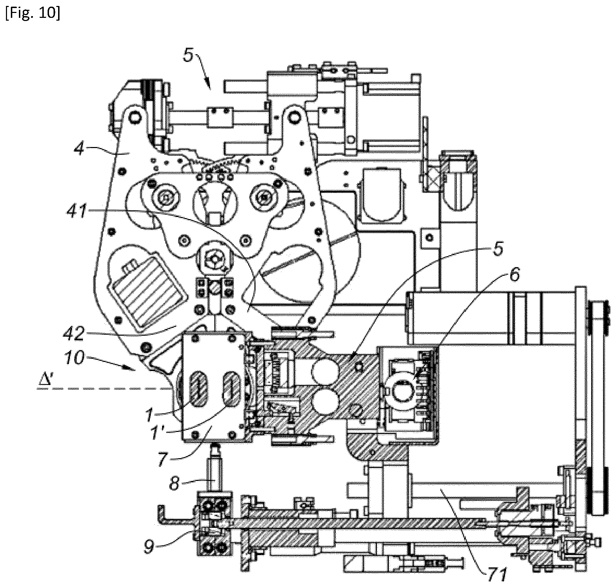

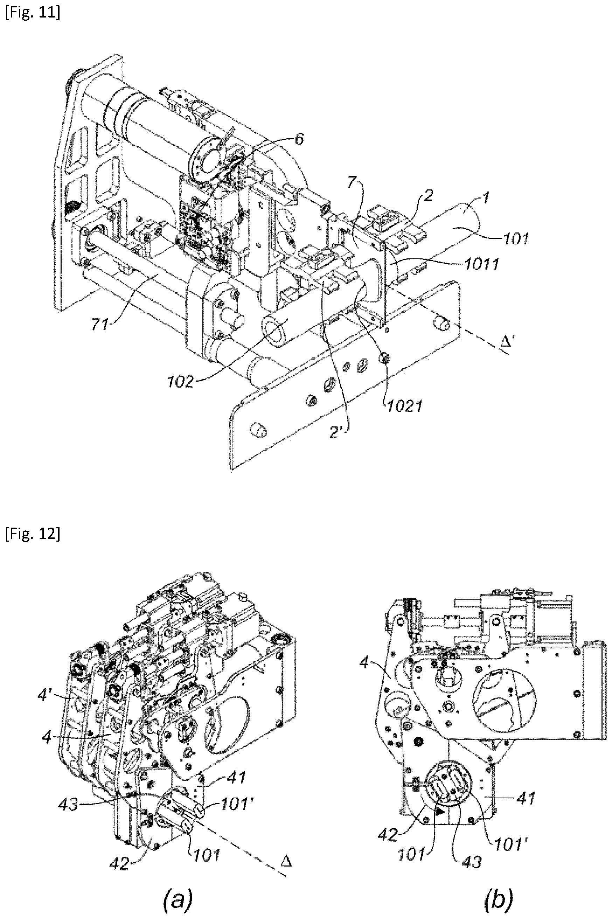

Cette opération de section est illustrée par les figures 10 et 11 suivantes.

La lame chauffante 7 est déplaçable en translation selon la direction transversale Δ' entre une position escamotée, déportée par rapport à la zone de soudure 10, et une position déployée, dans la zone de soudure 10.

Ce déplacement depuis la position escamotée vers la position déployée est effectué grâce aux moyens d'actionnement 5 et aux moyens de commande 6, et est notamment guidé par le rail de guidage 71 s'étendant selon la direction transversale Δ'.

Dans sa position déployée, la lame chauffante 7 est insérée entre la première pince 4 et la deuxième pince 4' (et entre le premier étrier 2 et le deuxième étrier 2'), de manière à sectionner le premier tube 1 et le deuxième tube 1' entre les deux zones de compression.

Il est à ce sujet utile de remarquer que, pour que l'insertion de la lame chauffante 7 puisse avoir lieu, il est nécessaire que la distance d'écartement E entre la première pince 4 et la deuxième pince 4' soit supérieure à une largeur de la lame chauffante 7.

Cette section a pour conséquence de former :
- deux premiers tronçons 101 et 102 à partir du premier tube 1, et
- deux deuxièmes tronçons 101' et 102' (non représentés sur la figure 11) à partir du deuxième tube 1'.

Le premier tronçon 101 et le deuxième tronçon 101' sont alors en position sur le premier étrier 2 ; le premier tronçon 102 et le deuxième tronçon 102' sont en position sur le deuxième étrier 2'.

En plus de sectionner le premier tube 1 et le deuxième tube 2, la lame chauffante 7 permet de faire fondre, au moins partiellement, les extrémités des premiers tronçons 101 et 102 et des deuxièmes tronçons 101' et 102' en contact avec la lame chauffante, à savoir : une extrémité 1011 du premier tronçon 101, une extrémité 1021 du premier tronçon 102, une extrémité 1011' du deuxième tronçon 101', et une extrémité 1021' du deuxième tronçon 102'.

Pour ce faire, il est nécessaire que le premier tube 1 et le deuxième tube 1' soient réalisés dans un matériau dont la température de fusion est inférieure à une température de soudure atteinte par la lame chauffante, par exemple 190°.

Une fois les tubes sectionnés, une étape de déplacement des premiers tronçons 101 et 102 est réalisée, comme illustré par la figure 12.

Cette étape a pour but de positionner les premiers tronçons 101 et 102 et des deuxièmes tronçons 101' et 102' en vue d'une étape de soudure permettant de les connecter entre eux.

Le déplacement des premiers tronçons 101 et 102 est réalisé grâce à une portion interne 43 de la première pince 4, située entre les mors 41 et 41' lorsque la pince 4 est en configuration fermée.

Cette portion interne 43 peut être mise en rotation (grâce aux moyens d'actionnement 5 et aux moyens de commande 6) autour d'un axe colinéaire à la direction longitudinale Δ, et est conçue pour entraîner dans son mouvement de rotation le premier étrier 2, ainsi que les premiers tronçons 101 et 102 en position sur ce dernier.

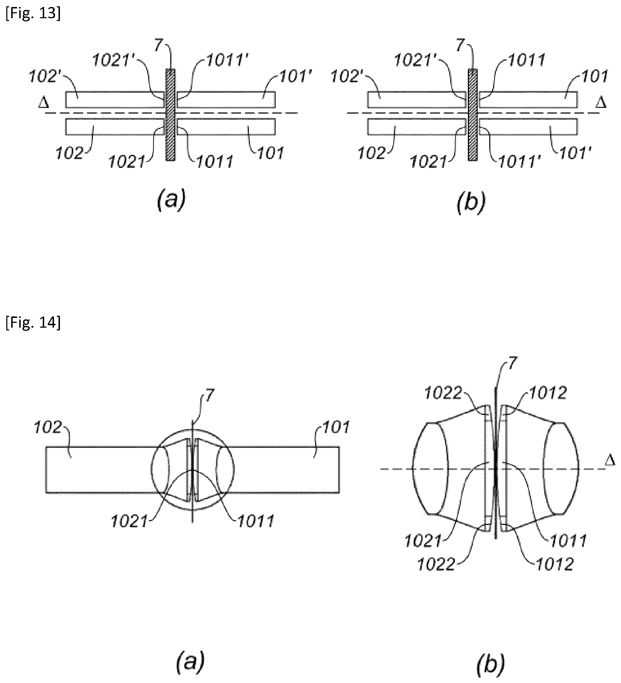

Une fois un mouvement de rotation à 180° effectué par la portion interne 43, la position du premier tronçon 101 et celle du deuxième tronçon 101' se trouvent « inversées », ce résultat étant visible sur la figure 13.b : le premier tronçon 101 est mis en regard du deuxième tronçon 102' (et l'extrémité 1011 est mise ne regard de l'extrémité 1021'), et le deuxième tronçon 101' est mis en regard du premier tronçon 102 (et l'extrémité 1011' est mise en regard de l'extrémité 1021).

La première pince 4 et la deuxième pince 4' sont ensuite à nouveau rapprochées selon la direction longitudinale Δ (diminuant ainsi la distance d'écartement E), de manière à mettre en contact les extrémités 1011, 1011', 1021 et 1021' avec la lame chauffante 7 et compenser la perte de matière issue de l'opération de section par la lame chauffante 7.

Cette étape de rapprochement a pour but de s'assurer que les extrémités 1011, 1011', 1021 et 1021' sont bien fondues sur la totalité du périmètre du premier tube 1 et du deuxième tube 2.

En effet, comme cela est illustré par la figure 14, lorsque la lame chauffante 7 sectionne, par exemple, le premier tube 1, celle-ci n'est pas en contact avec le premier tronçon 101 sur l'intégralité du périmètre de l'extrémité 1011 (de même, elle n'est pas en contact avec le premier tronçon 102 sur l'intégralité du périmètre de l'extrémité 1021) : si le contact a bien lieu entre la lame chauffante et les extrémités 1011 et 1021 à la hauteur de la direction longitudinale Δ, les portions 1012 du premier tronçon 101 et les portions 1022 du premier tronçon 102 déportées au-dessus et en dessous de cette direction longitudinale Δ ne sont pas en contact avec la lame chauffante.

Ce phénomène est expliqué par les forces de compressions exercées par la première pince 4 et la deuxième pince 4' déformant le premier tube te le deuxième tube selon la direction transversale Δ'.

En conséquence, il existe un risque que les portions 1012 et 1022 ne soient pas correctement fondues, donnant ensuite lieu à une connexion imparfaite entre les premiers tronçons 101 et 102 et les deuxièmes tronçons 101' et 102'.

Grâce à l'étape de rapprochement de la première pince 4 et de la deuxième pince 4' une fois la rotation de la portion interne 43 effectuée, les extrémités 1011, 1011', 1021 et 1021' sont correctement fondues sur l'intégralité de leur périmètre.

L'étape suivante consiste à écarter à nouveau la première pince 4 et de la deuxième pince 4' selon la direction transversale Δ' afin de supprimer le contact entre la lame chauffante 7 et les extrémités 1011, 1011', 1021 et 1021', puis à déplacer la lame chauffante 7 vers sa position escamotée, en dehors de la zone de soudure.

Enfin, la première pince 4 et de la deuxième pince 4' sont une dernière fois rapprochées selon la direction transversale Δ', afin de mettre en contact l'extrémité 1011 du premier tronçon 101 avec l'extrémité 1021' du deuxième tronçon 102', et l'extrémité 1011' du deuxième tronçon 101' avec l'extrémité 1021 du premier tronçon 102.

Après refroidissement de ces extrémités 1011, 1011', 1021 et 1021', le premier tronçon 101 se trouve connecté par soudure au deuxième tronçon 102' et le premier tronçon 102 se trouve connecté au deuxième tronçon 101', concluant ainsi l'opération de connexion.

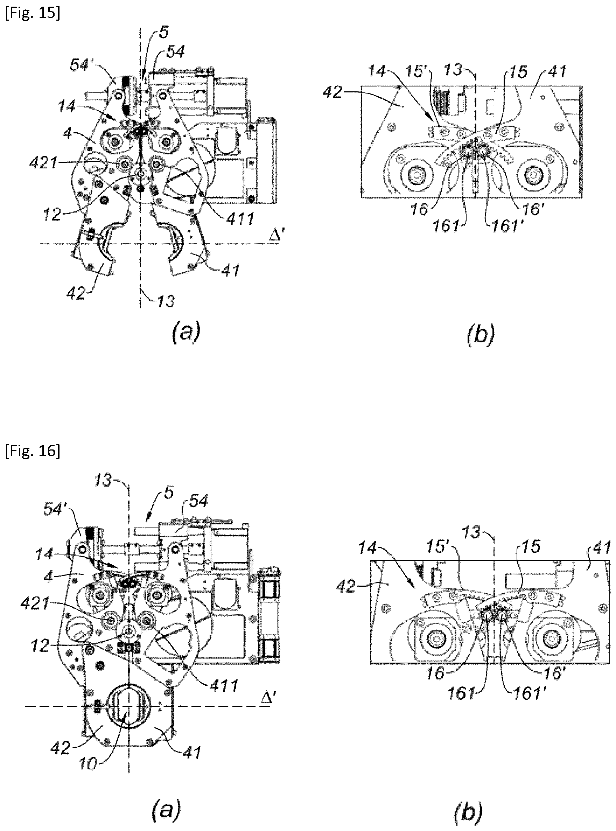

Les figures 15 à 19 suivantes proposent de détailler la cinématique de la première pince 4 et de la deuxième pince 4', ainsi que la structure des moyens d'actionnement 5 permettant de mettre celles-ci en mouvement.

Comme précédemment décrit, au cours de l'opération de connexion, le premier tube 1 et le deuxième tube 2 sont compressés selon la direction transversale Δ' par la fermeture de la première pince 4 et de la deuxième pince 4', afin de provoquer leur obturation complète et permettre leur section par la lame chauffante 7.

La figure 15.a représente la première pince 4 en configuration ouverte, et la figure 16.a la même première pince 4 en configuration fermée.

Le mouvement des mors 41 et 42 entre ces deux configurations est réalisé notamment grâce aux moyens d'actionnement 5, décrits plus loin.

Au cours de leur mouvement, les mors 41 et 42 suivent respectivement un mouvement de rotation autour d'un axe de rotation 411 et d'un axe de rotation 421, tous deux colinéaires à la direction longitudinale Δ, orthogonaux à la direction transversale Δ', et symétriques par rapport à un plan médian 13 vertical : ces mors 41 et 42 restent ainsi en permanence également symétriques l'un à l'autre par rapport au plan médian 13.

La première pince 4 comporte un dispositif autobloquant 14 permettant d'empêcher tout mouvement des mors 41 et 42 ayant pour conséquence de rompre leur symétrie par rapport au plan médian 13, notamment un mouvement global de rotation pendulaire de la pince 4 autour d'un axe de rotation 12 contenu dans le plan médian 13.

Dans le cas d'un tel mouvement, la compression effectuée par les mors 41 et 42 ne serait plus réalisée selon la direction transversale Δ' et pourrait avoir pour conséquence d'exercer des contraintes mécaniques importantes par exemple sur le système de support 8, menant potentiellement à une dégradation de la machine de connexion.

Le dispositif autobloquant 14 est détaillé par les figures 15.b et 16.b.

Ce dispositif autobloquant comporte :
- une première crémaillère 15 fixée sur le mors 41 et coopérant par engrenage avec un premier pignon 16, et
- une deuxième crémaillère 15' fixée sur le mors 42 et coopérant par engrenage avec un deuxième pignon 16'.

Dans ce mode de réalisation, le dispositif autobloquant 14 est symétrique par rapport au plan médian 13.

Le premier pignon 16 et le deuxième pignon 16' sont respectivement mis en rotation autour des axes 161 et 161', immobiles dans l'espace, par exemple solidaires d'un châssis de la machine de connexion 3.

La forme et le positionnement de la première crémaillère 15 et du premier pignon 16 sont adaptés pour permettre le mouvement de rotation du mors 41 autour de l'axe de rotation 411.

De même, la forme et le positionnement de la deuxième crémaillère 15' et du deuxième pignon 16' sont adaptés pour permettre le mouvement de rotation du mors 42 autour de l'axe de rotation 421.

De plus, le premier pignon 16 et le deuxième pignon 16' coopèrent également l'un avec l'autre par engrenage : cette caractéristique empêche toute rupture de symétrie entre les mors 41 et 42 par rapport au plan médian 13.

En effet, dans le cas d'un mouvement de rotation pendulaire global de la première pince 4 autour de l'axe de rotation 12, par exemple dans le sens de rotation trigonométrique, le premier pignon 16 et le deuxième pignon 16' seraient tous deux entraînés (par la première crémaillère 15 et la deuxième crémaillère 15') dans ce même sens de rotation trigonométrique : cette situation est physiquement impossible car, pour engrener l'un avec l'autre, ce premier pignon 16 et ce deuxième pignon 16' doivent nécessairement être mis en rotation dans des sens opposés.

Le dispositif autobloquant 14 permet donc bien de garantir que le mouvement des mors 41 et 42 reste à tout instant symétrique par rapport au plan médian 13.

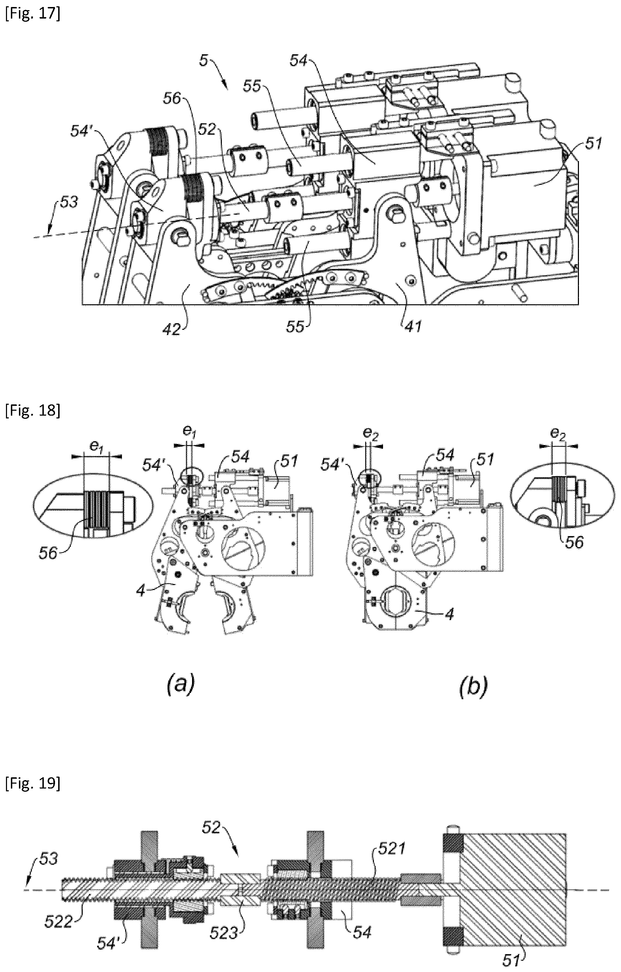

La mise en mouvement des mors 41 et 42 de la première pince 4 est réalisée par les moyens d'actionnement 5 représentés sur la figure 17.

Ces moyens d'actionnement 5 comportent :
- un moteur 51,
- un arbre d'entraînement 52 mis en rotation par le moteur 51 et s'étendant selon un axe de translation 53,
- une première pièce intermédiaire 54 en liaison pivot avec le mors 41, et
- une deuxième pièce intermédiaire 54' en liaison pivot avec le mors 42.

Cette première pièce intermédiaire 54 et cette deuxième pièce intermédiaire 54' sont déplaçables le long de l'axe de translation 53 sous l'action de l'arbre d'entraînement 52, par l'intermédiaire d'une liaison hélicoïdale qui sera davantage décrite plus bas.

La première pièce intermédiaire 54 est guidée dans ce mouvement de translation le long de l'axe de translation 53 par un dispositif de guidage 55.

Du fait de leur liaison avec les mors 41 et 42, le déplacement de cette première pièce intermédiaire 54 et de cette deuxième pièce intermédiaire 54' met en mouvement les mors 41 et 42 et permet l'ouverture ou la fermeture de la première pince 4.

Lorsque la première pince 4 est en configuration ouverte, la première pièce intermédiaire 54 et la deuxième pièce intermédiaire 54' se trouvent chacune dans une position proximale, comme visible sur la figure 15.a.

Lorsque le première pince 4 est en configuration fermée, la première pièce intermédiaire 54 et la deuxième pièce intermédiaire 54' se trouvent chacune dans une position distale, comme visible sur la figure 15.b.

Il est à noter que, dans ce mode de réalisation, ces dernières positions proximale et distale sont symétriques par rapport au plan médian 13.

La deuxième pièce intermédiaire 54' présente par ailleurs une portion déformable constituée par un empilement de rondelles élastiques 56 de type Belleville, dont l'épaisseur, selon l'axe de translation 54, peut être modifiée sous l'effet d'un effort mécanique.

Le rôle de cet empilement de rondelles élastiques 56 est de garantir la fermeture complète de la première pince 4 au cours de l'opération de connexion.

En effet, lorsque celle-ci se referme sur le premier tube 1 et le deuxième tube 2, il est possible que la résistance mécanique de ces derniers empêche sa fermeture complète : la deuxième pièce intermédiaire 54' n'atteint pas sa position distale définissant la configuration fermée de la première pince 4.

Pour pallier ce problème, le moteur 51 impose à cette deuxième pièce intermédiaire 54' un mouvement de translation supplémentaire, afin de la positionner dans sa position distale.

L'empilement de rondelles élastiques 56 permet, une fois deuxième pièce intermédiaire 54' bloquée dans sa position distale, d'absorber par sa déformation tout surplus de mouvement imposé par le moteur 51.

Cette déformation est illustrée par la figure 18.

Sur la figure 18.a, la première pince 4 est en cours de fermeture : la deuxième pièce intermédiaire 54' est placée entre sa position distale et sa position proximale, et l'empilement de rondelles élastiques 56 présente une épaisseur e1.

Sur la figure 18.b, la première pince 4 est complètement fermée : la deuxième pièce intermédiaire 54' est placée dans sa position distale, et l'empilement de rondelles élastiques 56 présente une épaisseur e2 inférieure à l'épaisseur e1.

En l'absence d'un tel empilement de rondelles élastiques 56 déformable selon l'axe de translation 53, ce surplus de mouvement pourrait par exemple conduire à une détérioration du moteur 51 ou à une déformation de la première pince 4 et de l'arbre d'entrainement 52.

La figure 19 détaille l'interaction entre l'arbre d'entraînement 52, la première pièce intermédiaire 54 et la deuxième pièce intermédiaire 54'.

L'arbre d'entrainement 52 est composé d'une vis à bille 521 et d'une vis trapézoïdale 522, accouplées par un manchon d'accouplement 523.

La vis à bille 521 est entraînée par le moteur 51 et coopère par un système vis-écrou avec la première pièce intermédiaire 54 : cette dernière présente un trou taraudé complémentaire au filetage de la vis à bille 521, de sorte que la rotation de la vis à bille 521 autour de l'axe de translation 53 entraîne en translation la première pièce intermédiaire 54.

De même, la vis trapézoïdale 522 coopère par un système vis-écrou avec la deuxième pièce intermédiaire 54' : cette dernière présente un trou taraudé complémentaire au filetage de la vis trapézoïdale 522, de sorte que la rotation de la vis trapézoïdale 522 autour de l'axe de translation 53 entraîne en translation la deuxième pièce intermédiaire 54'.

La vis trapézoïdale 522 est choisie de manière que celle-ci présente un coefficient de frottement avec la deuxième pièce intermédiaire 54' plus important que celui de la vis à bille 521 avec la première pièce intermédiaire 54, afin de rendre la liaison entre la vis trapézoïdale 522 et la deuxième pièce intermédiaire 54' irréversible, c'est-à-dire afin qu'un mouvement de translation de cette deuxième pièce intermédiaire 54' ne puisse pas entraîner en rotation la vis trapézoïdale 522 et l'arbre d'entraînement 52.

Cette caractéristique permet d'empêcher l'ouverture de la première pince 4 sous l'effet des efforts mécaniques exercés sur celle-ci par le premier tube 1 et le deuxième tube 1' qu'elle maintient en compression.

Par exemple, cela permet d'éviter, en cas de coupure de l'alimentation électrique du moteur 51 pendant une opération de connexion, que la première pince 4 ne s'ouvre brusquement, répandant ainsi les composés chimiques ou biologiques présents à l'intérieur du premier tube 1 et du deuxième tube 1' dans la machine de connexion.

Par ailleurs, la vis à bille 521 est choisie pour son bon rendement énergétique.

L'association de la vis à bille 521 avec la vis trapézoïdale 522 permet donc de garantir à la fois une grande fiabilité dans le mouvement de fermeture de la première pince 4 et un bon rendement énergétique des moyens d'actionnement 5, en limitant les pertes du couple moteur fourni à l'arbre d'entraînement 52 par le moteur 51.

Ainsi, la machine de connexion 3 selon l'invention permet bien de connecter entre eux un premier tube 1 et un deuxième tube 1' par thermo-soudure, de manière fiable et sécurisée, tout en restant simple d'utilisation par un opérateur et en limitant les risques de contamination du milieu extérieur.

## Revendications

1. Machine de connexion (3) adaptée pour connecter par thermo-soudure un premier tube (1) et un deuxième tube (1'), comportant :
- un système de préhension, conçu pour positionner dans une zone de soudure (10), parallèles entre eux selon une direction longitudinale (Δ), le premier tube (1) et le deuxième tube (1'), et pour compresser lesdits premier tube (1) et deuxième tube (1') selon une direction transversale (Δ'),
- une lame chauffante (7), apte à sectionner le premier tube (1) et le deuxième tube (1') lorsque ceux-ci sont en position dans le système de préhension, de manière à former deux premiers tronçons (101, 102) à partir du premier tube (1) et deux deuxièmes tronçons (101', 102') à partir du deuxième tube (1'), chacun de ces premiers tronçons (101, 102) et deuxièmes tronçons (101', 102') présentant une extrémité fondue (1011, 1021, 1011', 1021'), et
- des moyens d'actionnement et de commande (5, 6) prévus pour déplacer le système de préhension et la lame chauffante (7),
et dans laquelle le système de préhension est adapté pour déplacer lesdits premiers tronçons (101, 102) et deuxièmes tronçons (101', 102') de manière à mettre en contact l'extrémité fondue (1011, 1021) d'au moins l'un des premiers tronçons (101, 102) avec celle (1011', 1021') d'au moins l'un des deuxièmes tronçons (101', 102'),
**caractérisée en ce que** les moyens d'actionnement et de commande (5, 6) sont disposés à distance de la zone de soudure (10) et en dehors de la zone de projection naturelle (11) de débris ou d'impuretés résultant de l'opération de connexion par thermo-soudure du premier tube (1) et du deuxième tube (1'), substantiellement située autour du premier tube (1) et du deuxième tube (1') et en dessous desdits tubes (1, 1').

2. Machine de connexion (3) selon la revendication précédente, dans laquelle les moyens d'actionnement et de commande (5, 6) sont disposés au-dessus de la zone de soudure (10), de sorte que les détritus ou impuretés sont écartés des moyens d'actionnement et de commande (5, 6) par gravité.

3. Machine de connexion (3) selon l'une quelconque des revendications précédentes, comportant un compartiment de manutention (9) déplaçable par translation entre une position rétractée, sous la zone de soudure (10) et inaccessible à un utilisateur de la machine de connexion (3), et une position déployée, déportée par rapport à la zone de soudure (10) et permettant à cet utilisateur de positionner le premier tube (1) et le deuxième tube (1') en position dans le système de préhension.

4. Machine de connexion (3) selon la revendication précédente, dans laquelle le compartiment de manutention (9) présente une portion de réception destinée à recevoir les débris ou impuretés, permettant le nettoyage de ces débris ou impuretés lorsque le compartiment de manutention (9) est en position déployée.

5. Machine de connexion (3) selon l'une quelconque des revendications précédentes, dans laquelle le système de préhension comprend :
- une première pince (4) et une deuxième pince (4') présentant chacune deux mors (41, 42, 41', 42') déplaçables entre une configuration ouverte et une configuration fermée,
- un élément de support (8), et
- un premier étrier (2) et un deuxième étrier (2'), aptes à être positionnés sur l'élément de support (8), et comportant chacun un corps central (21, 21') qui présente deux faces opposées (211, 211'), chacune de ces faces opposées (211, 211') étant munie d'un emplacement (23, 23') prévu pour recevoir le premier tube (1) ou le deuxième tube (1'),
le premier étrier (2) étant adapté pour coopérer avec la première pince (4) et le deuxième étrier (2') étant adapté pour coopérer avec la deuxième pince (4'), de sorte que, lorsque le premier tube (1) et le deuxième tube (1') sont en position sur chacun des premier étrier (2) et deuxième étrier (2') et lorsque la première pince (4) et la deuxième pince (4') sont en configuration fermée, lesdits premier tube (1) et deuxième tube (1') sont tous deux compressés selon la direction transversale (Δ') entre le corps central (21, 21') du premier étrier (2) et du deuxième étrier (2') et l'un des mors de la première pince (4) ou de la deuxième pince (4').

6. Machine de connexion (3) selon la revendication précédente, dans laquelle les deux mors (41, 41', 42, 42') d'au moins l'une de la première pince (4) et de la deuxième pince (4') sont symétriques, dans la configuration ouverte et la configuration fermée, par rapport à un plan médian (13) vertical et sont guidés en rotation, entre ces dernières configurations, autour de deux axes de rotation (411, 421), parallèles entre eux et symétriques par rapport au plan médian (13), et dans laquelle chacun desdits mors (41, 41', 42, 42') est lié par une liaison pivot à une pièce intermédiaire (54, 54'), chacune de ces pièces intermédiaires étant déplaçable en translation selon un même axe de translation (53), orthogonal à l'axe de rotation (12), entre une position proximale, définissant la configuration ouverte de ladite pince (4, 4'), et une position distale, définissant la configuration fermée de ladite pince (4, 4').

7. Machine de connexion (3) selon la revendication précédente, dans laquelle les pièces intermédiaires (54, 54') sont déplaçables selon l'axe de translation (53) sous l'action d'un actionneur, et dans laquelle au moins l'une des pièces intermédiaires (54, 54') présente une portion déformable, conçue pour se déformer dans la direction de l'axe de translation (53), de manière à compenser un déplacement sous l'action de l'actionneur, lorsque ladite pièce intermédiaire (54, 54') est dans sa position distale.

8. Machine de connexion (3) selon la revendication précédente, dans laquelle la partie déformable comporte un organe élastique, tel qu'un empilement de rondelles élastiques (56) de type Belleville dans la direction de l'axe de translation (53).

9. Machine de connexion (3) selon l'une quelconque des revendications 6 à 8, dans laquelle les pièces intermédiaires (54, 54') sont reliées à un même arbre d'entrainement (52), s'étendant selon l'axe de translation (53), par l'intermédiaire d'un système vis-écrou, l'arbre d'entraînement (52) entraînant par sa rotation les pièces intermédiaires (54, 54') en translation,
et dans laquelle ledit système vis-écrou est conformé pour être irréversible.

10. Machine de connexion (3) selon la revendication précédente, dans laquelle l'arbre d'entrainement (52) comporte :
- une vis à bille (521) coopérant avec l'une des pièces intermédiaires (54, 54'),
- une vis trapézoïdale (522) coopérant avec l'autre des pièces intermédiaires (54, 54'), et
- un manchon d'accouplement (53), permettant d'accoupler la vis à bille (521) et la vis trapézoïdale (522),
le coefficient de frottement entre la vis trapézoïdale (522) et la pièce intermédiaire (54, 54') avec laquelle elle coopère étant plus important que celui entre la vis à bille (521) et la pièce intermédiaire (54, 54') avec laquelle elle coopère.

11. Machine de connexion (3) selon l'une quelconque des revendications 6 à 10, dans laquelle ladite pince (4, 4') comporte un dispositif autobloquant (14) fixé sur les mors (41, 42, 41', 42') de celle-ci, permettant d'empêcher tout mouvement relatif de ces derniers ayant pour conséquence de rompre leur symétrie par rapport au plan médian (13).

12. Machine de connexion (3) selon la revendication précédente, dans laquelle le dispositif autobloquant (14) comporte :
- une première crémaillère (15), fixée sur l'un premier des mors (41, 41', 42, 42') de ladite pince (4, 4'), coopérant par engrenage avec un premier pignon fixe (16), de manière à guider le mouvement de rotation dudit mors (41, 41', 42, 42') autour de l'axe de rotation (12),
- une deuxième crémaillère (15'), fixée sur l'autre des mors (41, 41', 42, 42') de ladite pince (4, 4'), coopérant par engrenage avec un deuxième pignon (16') fixe, de manière à guider le mouvement de rotation dudit mors (41, 41', 42, 42') autour de l'axe de rotation (12),
et dans laquelle le premier pignon (16) et le deuxième pignon (16') coopèrent également par engrenage l'un avec l'autre.

13. Machine de connexion (3) selon l'une quelconque des revendications 5 à 12, dans laquelle le système de préhension est adapté pour déplacer les premiers tronçons (101, 102) et deuxièmes tronçons (101', 102') de manière à mettre en contact l'extrémité fondue (1011, 1021) de l'un des premiers tronçons (101, 102) avec celle (1011', 1021') de l'un des deuxièmes tronçons (101', 102'), et à mettre en contact l'extrémité fondue (1011, 1021) de l'autre des premiers tronçons (101, 102) avec celle (1011', 1021') de l'autre des deuxièmes tronçons (101', 102'), et dans laquelle la première pince (4) présente une portion interne (43) conçue pour effectuer, lorsque ladite première pince (4) est en configuration fermée, un mouvement de rotation par rapport aux mors (41, 42) de celle-ci autour d'un axe colinéaire à la direction longitudinale (Δ),
ladite portion interne (43) étant conformée pour entraîner en rotation le premier étrier (2) ainsi que l'un des premiers tronçons (101) et l'un des deuxièmes tronçons (101') en position sur ce même premier étrier (2), afin de mettre en contact l'extrémité fondue (1011) du premier tronçon (101) en position sur le premier étrier (2) avec celle (1021') du deuxième tronçon (102') en position sur le deuxième étrier (2'), et à mettre en contact l'extrémité fondue (1011') du deuxième tronçon (101') en position sur le premier étrier (2) avec celle (1021) du premier tronçon (102) en position sur le deuxième étrier (2').

## Patentansprüche

1. Verbindungsmaschine (3), die zum Verbinden eines ersten Schlauchs (1) und eines zweiten Schlauchs (1') durch Thermoschweißen ausgebildet ist und aufweist:
- ein Greifsystem, das dazu ausgelegt ist, den ersten Schlauch (1) und den zweiten Schlauch (1') in einem Schweißbereich (10) parallel zueinander entlang einer Längsrichtung (Δ) zu positionieren und die genannten Schläuche (1, 1') entlang einer Querrichtung (Δ') zusammenzupressen,
- eine Heizklinge (7), die dazu geeignet ist, den ersten Schlauch (1) und den zweiten Schlauch (1') zu trennen, wenn diese sich in Position im Greifsystem befinden, sodass aus dem ersten Schlauch (1) zwei erste Abschnitte (101, 102) und aus dem zweiten Schlauch (1') zwei zweite Abschnitte (101', 102') gebildet werden, wobei jeder dieser ersten Abschnitte (101, 102) und zweiten Abschnitte (101', 102') ein verschmolzenes Ende (1011, 1021, 1011', 1021') aufweist, und
- Betätigungs- und Steuermittel (5, 6), die zum Bewegen des Greifsystems und der Heizklinge (7) vorgesehen sind,
wobei das Greifsystem dazu ausgelegt ist, die genannten ersten Abschnitte (101, 102) und zweiten Abschnitte (101', 102') derart zu bewegen, dass das verschmolzene Ende (1011, 1021) von mindestens einem der ersten Abschnitte (101, 102) mit dem verschmolzenen Ende (1011', 1021') von mindestens einem der zweiten Abschnitte (101', 102') in Kontakt gebracht wird,
**dadurch gekennzeichnet, dass** die Betätigungs- und Steuermittel (5, 6) in einem Abstand von dem Schweißbereich (10) und außerhalb des natürlichen Projektonsbereichs (11) von bei der thermischen Verbindung des ersten Schlauchs (1) und des zweiten Schlauchs (1') entstehenden Partikeln oder Verunreinigungen angeordnet sind, welcher sich im Wesentlichen um den ersten Schlauch (1) und den zweiten Schlauch (1') herum und unterhalb der genannten Schläuche (1, 1') befindet.

2. Verbindungsmaschine (3) nach dem vorhergehenden Anspruch, wobei die Betätigungs- und Steuermittel (5, 6) oberhalb des Schweißbereichs (10) angeordnet sind, sodass die Partikel oder Verunreinigungen durch die Schwerkraft von den Betätigungs- und Steuermitteln (5, 6) ferngehalten werden.

3. Verbindungsmaschine (3) nach einem der vorhergehenden Ansprüche, mit einem Handhabungsfach (9), das zwischen einer eingefahrenen Position unterhalb des Schweißbereichs (10), in der es für einen Benutzer der Verbindungsmaschine (3) unzugänglich ist, und einer ausgefahrenen Position, die gegenüber dem Schweißbereich (10) versetzt ist und es dem Benutzer ermöglicht, den ersten Schlauch (1) und den zweiten Schlauch (1') im Greifsystem zu positionieren, translatorisch bewegbar ist.

4. Verbindungsmaschine (3) nach dem vorhergehenden Anspruch, wobei das Handhabungsfach (9) einen Aufnahmeteil aufweist, der zum Aufnehmen der Partikel oder Verunreinigungen ausgebildet ist und das Reinigen dieser Partikel oder Verunreinigungen ermöglicht, wenn sich das Handhabungsfach (9) in der ausgefahrenen Position befindet.

5. Verbindungsmaschine (3) nach einem der vorhergehenden Ansprüche, wobei das Greifsystem umfasst:
- eine erste Klemme (4) und eine zweite Klemme (4'), die jeweils zwei Backen (41, 42, 41', 42') aufweisen, welche zwischen einer offenen und einer geschlossenen Konfiguration bewegbar sind,
- ein Tragelement (8), und
- einen ersten Bügel (2) und einen zweiten Bügel (2'), die dazu geeignet sind, auf dem Tragelement (8) positioniert zu werden, und jeweils einen Mittelkörper (21, 21') aufweisen, der zwei einander gegenüberliegende Flächen (211, 211') hat, von denen jede mit einer Aufnahme (23, 23') versehen ist, die zum Aufnehmen des ersten Schlauchs (1) oder des zweiten Schlauchs (1') vorgesehen ist,
wobei der erste Bügel (2) zur Zusammenarbeit mit der ersten Klemme (4) und der zweite Bügel (2') zur Zusammenarbeit mit der zweiten Klemme (4') ausgebildet ist, sodass, wenn der erste Schlauch (1) und der zweite Schlauch (1') jeweils auf dem ersten Bügel (2) bzw. dem zweiten Bügel (2') positioniert sind und wenn sich die erste Klemme (4) und die zweite Klemme (4') in der geschlossenen Konfiguration befinden, der erste Schlauch (1) und der zweite Schlauch (1') beide entlang der Querrichtung (Δ') zwischen dem Mittelkörper (21, 21') des ersten Bügels (2) bzw. des zweiten Bügels (2') und einer der Backen der ersten Klemme (4) bzw. der zweiten Klemme (4') zusammengepresst sind.

6. Verbindungsmaschine (3) nach dem vorhergehenden Anspruch, wobei die beiden Backen (41, 41', 42, 42') von mindestens einer der ersten Klemme (4) und der zweiten Klemme (4') sowohl in der offenen als auch in der geschlossenen Konfiguration symmetrisch zu einer vertikalen Mittelebene (13) sind und zwischen diesen Konfigurationen um zwei Rotationsachsen (411, 421) drehgeführt werden, die parallel zueinander und symmetrisch zur Mittelebene (13) verlaufen, und wobei jede der genannten Backen (41, 41', 42, 42') über ein Drehgelenk mit einem Zwischenstück (54, 54') verbunden ist, wobei jedes dieser Zwischenstücke entlang derselben Translationsachse (53), die orthogonal zur Rotationsachse (12) ist, zwischen einer proximalen Position, die die offene Konfiguration der betreffenden Klemme (4, 4') definiert, und einer distalen Position, die die geschlossene Konfiguration der betreffenden Klemme (4, 4') definiert, translatorisch bewegbar ist.

7. Verbindungsmaschine (3) nach dem vorhergehenden Anspruch, wobei die Zwischenstücke (54, 54') unter der Einwirkung eines Aktuators entlang der Translationsachse (53) bewegbar sind, und wobei mindestens eines der Zwischenstücke (54, 54') einen deformierbaren Abschnitt aufweist, der dazu ausgelegt ist, sich in Richtung der Translationsachse (53) zu verformen, um eine Bewegung unter der Wirkung des Aktuators zu kompensieren, wenn sich das genannte Zwischenstück (54, 54') in seiner distalen Position befindet.

8. Verbindungsmaschine (3) nach dem vorhergehenden Anspruch, wobei der deformierbare Abschnitt ein elastisches Organ umfasst, wie etwa einen Stapel elastischer Scheiben (56) vom Belleville-Typ in Richtung der Translationsachse (53).

9. Verbindungsmaschine (3) nach einem der Ansprüche 6 bis 8, wobei die Zwischenstücke (54, 54') über ein Schraub-Mutter-System mit derselben Antriebswelle (52), die sich entlang der Translationsachse (53) erstreckt, verbunden sind, wobei die Antriebswelle (52) durch ihre Rotation die Zwischenstücke (54, 54') translatorisch antreibt, und wobei das genannte Schraub-Mutter-System so ausgebildet ist, dass es selbsthemmend ist.

10. Verbindungsmaschine (3) nach dem vorhergehenden Anspruch, wobei die Antriebswelle (52) Folgendes umfasst:
- eine Kugelgewindespindel (521), die mit einem der Zwischenstücke (54, 54') zusammenwirkt,
- eine Trapezgewindespindel (522), die mit dem anderen der Zwischenstücke (54, 54') zusammenwirkt, und
- eine Kupplungshülse (53), die die Kupplung der Kugelgewindespindel (521) und der Trapezgewindespindel (522) ermöglicht,
wobei der Reibungskoeffizient zwischen der Trapezgewindespindel (522) und dem Zwischenstück (54, 54'), mit dem sie zusammenwirkt, größer ist als derjenige zwischen der Kugelgewindespindel (521) und dem Zwischenstück (54, 54'), mit dem sie zusammenwirkt.

11. Verbindungsmaschine (3) nach einem der Ansprüche 6 bis 10, wobei die genannte Klemme (4, 4') eine Selbstverriegelungsvorrichtung (14) aufweist, die an deren Backen (41, 42, 41', 42') befestigt ist und jegliche Relativbewegung zwischen diesen verhindert, die dazu führen würde, deren Symmetrie zur Mittelebene (13) zu zerstören.

12. Verbindungsmaschine (3) nach dem vorhergehenden Anspruch, wobei die Selbstverriegelungsvorrichtung (14) Folgendes umfasst:
- eine erste Zahnstange (15), die an einer ersten der Backen (41, 41', 42, 42') der genannten Klemme (4, 4') befestigt ist und im Eingriff mit einem ersten feststehenden Zahnrad (16) steht, um die Drehbewegung der genannten Backe (41, 41', 42, 42') um die Rotationsachse (12) zu führen,
- eine zweite Zahnstange (15'), die an der anderen Backe (41, 41', 42, 42') der genannten Klemme (4, 4') befestigt ist und im Eingriff mit einem zweiten feststehenden Zahnrad (16') steht, um die Drehbewegung der genannten Backe (41, 41', 42, 42') um die Rotationsachse (12) zu führen,
wobei das erste Zahnrad (16) und das zweite Zahnrad (16') ebenfalls miteinander im Zahneingriff stehen.

13. Verbindungsmaschine (3) nach einem der Ansprüche 5 bis 12, wobei das Greifsystem dazu ausgelegt ist, die ersten Abschnitte (101, 102) und die zweiten Abschnitte (101', 102') derart zu bewegen, dass das verschmolzene Ende (1011, 1021) eines der ersten Abschnitte (101, 102) mit dem verschmolzenen Ende (1011', 1021') eines der zweiten Abschnitte (101', 102') in Kontakt gebracht wird und das verschmolzene Ende (1011, 1021) des anderen der ersten Abschnitte (101, 102) mit dem verschmolzenen Ende (1011', 1021') des anderen der zweiten Abschnitte (101', 102') in Kontakt gebracht wird, und wobei die erste Klemme (4) einen inneren Abschnitt (43) aufweist, der dazu ausgebildet ist, in der geschlossenen Konfiguration der genannten ersten Klemme (4) eine Drehbewegung relativ zu deren Backen (41, 42) um eine zur Längsrichtung (Δ) kollineare Achse auszuführen,
wobei der genannte innere Abschnitt (43) so ausgebildet ist, dass er den ersten Bügel (2) sowie einen ersten Abschnitt (101) und einen zweiten Abschnitt (101'), die auf diesem ersten Bügel (2) positioniert sind, in Drehung versetzt, um das verschmolzene Ende (1011) des ersten Abschnitts (101) auf dem ersten Bügel (2) mit dem verschmolzenen Ende (1021') des zweiten Abschnitts (102') auf dem zweiten Bügel (2') in Kontakt zu bringen und das verschmolzene Ende (1011') des zweiten Abschnitts (101') auf dem ersten Bügel (2) mit dem verschmolzenen Ende (1021) des ersten Abschnitts (102) auf dem zweiten Bügel (2') in Kontakt zu bringen.

## Claims

1. A connection machine (3) adapted to connect by thermowelding a first tube (1) and a second tube (1'), comprising:
- a gripping system, designed to position, in a welding zone (10), the first tube (1) and the second tube (1') parallel to one another along a longitudinal direction (Δ), and to compress said first tube (1) and second tube (1') along a transverse direction (Δ'),
- a heating blade (7), suitable for cutting the first tube (1) and the second tube (1') when these are in position in the gripping system, so as to form two first sections (101, 102) from the first tube (1) and two second sections (101', 102') from the second tube (1'), each of these first sections (101, 102) and second sections (101', 102') having a melted end (1011, 1021, 1011', 1021'), and
- actuating means and control means (5, 6) provided to displace the gripping system and the heating blade (7),
and in which the gripping system is adapted to displace said first sections (101, 102) and second sections (101', 102') so as to bring the melted end (1011, 1021) of at least one of the first sections (101, 102) into contact with the melted end (1011', 1021') of at least one of the second sections (101', 102'),
**characterized in that** the actuating means and the control means (5, 6) are arranged at a distance from the welding zone (10) and outside a natural projection zone (11) of debris or impurities resulting from the operation of connection by thermowelding of the first tube (1) and the second tube (1'), which is substantially located around the first tube (1) and the second tube (1') and below said tubes (1, 1').

2. The connection machine (3) according to the preceding claim, in which the actuating means and the control means (5, 6) are arranged above the welding zone (10), so that debris or impurities are kept away from the actuating means and the control means (5, 6) by gravity.

3. The connection machine (3) according to any one of the preceding claims, comprising a handling compartment (9) that is movable in translation between a retracted position, under the welding zone (10) and inaccessible to a user of the connection machine (3), and a deployed position, offset relative to the welding zone (10) and allowing this user to position the first tube (1) and the second tube (1') in position in the gripping system.

4. The connection machine (3) according to the preceding claim, in which the handling compartment (9) has a receiving portion intended to receive debris or impurities, allowing the cleaning of this debris or these impurities when the handling compartment (9) is in the deployed position.

5. The connection machine (3) according to any one of the preceding claims, in which the gripping system comprises:
- a first clamp (4) and a second clamp (4'), each having two jaws (41, 42, 41', 42') that are movable between an open configuration and a closed configuration,
- a support element (8), and
- a first yoke (2) and a second yoke (2'), suitable for being positioned on the support element (8), and each comprising a central body (21, 21') that has two opposite faces (211, 211'), each of these opposite faces (211, 211') being provided with a location (23, 23') intended to receive the first tube (1) or the second tube (1'),
the first yoke (2) being adapted to cooperate with the first clamp (4) and the second yoke (2') being adapted to cooperate with the second clamp (4'), so that, when the first tube (1) and the second tube (1') are in position on each of the first yoke (2) and the second yoke (2') and when the first clamp (4) and the second clamp (4') are in the closed configuration, said first tube (1) and second tube (1') are both compressed along the transverse direction (Δ') between the central body (21, 21') of the first yoke (2) and of the second yoke (2') and one of the jaws of the first clamp (4) or of the second clamp (4').

6. The connection machine (3) according to the preceding claim, in which the two jaws (41, 41', 42, 42') of at least one of the first clamp (4) and the second clamp (4') are symmetrical, in the open configuration and in the closed configuration, with respect to a vertical median plane (13) and are guided in rotation, between these configurations, about two rotation axes (411, 421), which are parallel to one another and symmetrical with respect to the median plane (13),
and in which each of said jaws (41, 41', 42, 42') is connected by a pivot connection to an intermediate piece (54, 54'), each of these intermediate pieces being movable in translation along the same translation axis (53), orthogonal to the rotation axis (12), between a proximal position, defining the open configuration of said clamp (4, 4'), and a distal position, defining the closed configuration of said clamp (4, 4').

7. The connection machine (3) according to the preceding claim, in which the intermediate pieces (54, 54') are movable along the translation axis (53) under the action of an actuator, and in which at least one of the intermediate pieces (54, 54') has a deformable portion, designed to deform in the direction of the translation axis (53) so as to compensate for a displacement under the action of the actuator, when said intermediate piece (54, 54') is in its distal position.

8. The connection machine (3) according to the preceding claim, in which the deformable portion comprises an elastic member, such as a stack of Belleville-type elastic washers (56) in the direction of the translation axis (53).

9. The connection machine (3) according to any one of claims 6 to 8, in which the intermediate pieces (54, 54') are connected to a same drive shaft (52), extending along the translation axis (53), by means of a screw-nut system, the drive shaft (52) driving the intermediate pieces (54, 54') in translation by its rotation,
and in which said screw-nut system is configured so as to be irreversible.

10. The connection machine (3) according to the preceding claim, in which the drive shaft (52) comprises:
- a ballscrew (521) cooperating with one of the intermediate pieces (54, 54'),
- a trapezoidal screw (522) cooperating with the other of the intermediate pieces (54, 54'), and
- a coupling sleeve (53), allowing the ballscrew (521) and the trapezoidal screw (522) to be coupled,
the coefficient of friction between the trapezoidal screw (522) and the intermediate piece (54, 54') with which it cooperates being greater than that between the ballscrew (521) and the intermediate piece (54, 54') with which it cooperates.

11. The connection machine (3) according to any one of claims 6 to 10, in which said clamp (4, 4') comprises a self-locking device (14) fixed on the jaws (41, 42, 41', 42') thereof, making it possible to prevent any relative movement of said jaws resulting in breaking their symmetry with respect to the median plane (13).

12. The connection machine (3) according to the preceding claim, in which the self-locking device (14) comprises:
- a first rack (15), fixed on a first one of the jaws (41, 41', 42, 42') of said clamp (4, 4'), meshing with a first fixed pinion (16), so as to guide the rotational movement of said jaw (41, 41', 42, 42') about the rotation axis (12),
- a second rack (15'), fixed on the other of the jaws (41, 41', 42, 42') of said clamp (4, 4'), meshing with a second fixed pinion (16'), so as to guide the rotational movement of said jaw (41, 41', 42, 42') about the rotation axis (12),
and in which the first pinion (16) and the second pinion (16') also mesh with one another.

13. The connection machine (3) according to any one of claims 5 to 12, in which the gripping system is adapted to displace the first sections (101, 102) and the second sections (101', 102') so as to bring the melted end (1011, 1021) of one of the first sections (101, 102) into contact with the melted end (1011', 1021') of one of the second sections (101', 102'), and to bring the melted end (1011, 1021) of the other of the first sections (101, 102) into contact with the melted end (1011', 1021') of the other of the second sections (101', 102'), and in which the first clamp (4) has an internal portion (43) designed to perform, when said first clamp (4) is in the closed configuration, a rotational movement relative to the jaws (41, 42) thereof about an axis colinear with the longitudinal direction (Δ),
said internal portion (43) being shaped to drive in rotation the first yoke (2) as well as one of the first sections (101) and one of the second sections (101') in position on this same first yoke (2), in order to bring the melted end (1011) of the first section (101) in position on the first yoke (2) into contact with the melted end (1021') of the second section (102') in position on the second yoke (2'), and to bring the melted end (1011') of the second section (101') in position on the first yoke (2) into contact with the melted end (1021) of the first section (102) in position on the second yoke (2').
